(19) Europäisches Patentamt
European Patent Office
Office européen des brevets

(11) **EP 4 501 749 A1**

(12) **EUROPEAN PATENT APPLICATION**
published in accordance with Art. 153(4) EPC

(43) Date of publication:
**05.02.2025 Bulletin 2025/06**

(21) Application number: **23811393.0**

(22) Date of filing: **07.03.2023**

(51) International Patent Classification (IPC):
**B62D 21/00** (2006.01)     **G01M 7/02** (2006.01)
**G01M 17/007** (2006.01)     **G06F 30/15** (2020.01)
**G06F 30/20** (2020.01)

(52) Cooperative Patent Classification (CPC):
**B62D 21/00; G01M 7/02; G01M 17/007;
G06F 30/15; G06F 30/20; G06F 30/23;** Y02T 10/40

(86) International application number:
**PCT/JP2023/008574**

(87) International publication number:
**WO 2023/228512 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.05.2022 JP 2022085105**

(71) Applicant: **JFE Steel Corporation
Tokyo 100-0011 (JP)**

(72) Inventor: **TOKITA, Yuichi
Tokyo 100-0011 (JP)**

(74) Representative: **Haseltine Lake Kempner LLP
Bürkleinstrasse 10
80538 München (DE)**

(54) **DEVICE, PROGRAM, AND METHOD FOR OPTIMIZATION ANALYSIS OF JOINT POSITIONS IN CAR BODY, AND METHOD FOR MANUFACTURING CAR BODY**

(57) An optimization analysis method for joining positions of an automotive body according to the present invention includes: setting the whole or a part of an automotive body model as an analysis object model (S1); setting candidates for weld lines to the analysis object model to generate a weld line optimization analysis model 151 (S3); setting a variable amplitude loading condition (S5); setting a target fatigue life (S6); performing a part stiffness sensitivity analysis to select a low-stiffness-sensitivity part model having low sensitivity to stiffness performance (S7); generating a weld line and part shape optimization analysis model 156 (S8); and setting, as optimization analysis conditions, a condition related to a linear cumulative damage of a candidate for weld line to be left, a condition related to stiffness of the weld line and part shape optimization analysis model 156, a condition related to the length of the candidate for weld line to be left by optimization analysis, and a condition related to a volume constraint ratio of the low-stiffness-sensitivity part (S9); and applying the variable amplitude loading condition to the weld line and part shape optimization analysis model 156 to perform optimization analysis to obtain the optimal arrangement of weld lines 157 and the optimized shape of the low-stiffness-sensitivity part model that achieve the optimization analysis condition (S11).

FIG.13

```
                    ┌───────────┐
                    │   START   │
                    └─────┬─────┘
         ┌────────────────────────────────────┐
         │  ANALYSIS OBJECT MODEL SETTING STEP │ ── S1
         └────────────────┬───────────────────┘
         ┌────────────────────────────────────┐
         │  WELD LINE OPTIMIZATION ANALYSIS    │ ── S3
         │  MODEL GENERATING STEP              │
         └────────────────┬───────────────────┘
         ┌────────────────────────────────────┐
         │  VARIABLE AMPLITUDE LOADING         │ ── S5
         │  CONDITION SETTING STEP             │
         └────────────────┬───────────────────┘
         ┌────────────────────────────────────┐
         │  TARGET FATIGUE LIFE SETTING STEP   │ ── S6
         └────────────────┬───────────────────┘
         ┌────────────────────────────────────┐
         │  PART STIFFNESS SENSITIVITY         │ ── S7
         │  ANALYSIS STEP                      │
         └────────────────┬───────────────────┘
         ┌────────────────────────────────────┐
         │  WELD LINE AND PART SHAPE           │ ── S8
         │  OPTIMIZATION ANALYSIS MODEL        │
         │  GENERATING STEP                    │
         └────────────────┬───────────────────┘
         ┌────────────────────────────────────┐
         │  OPTIMIZATION ANALYSIS CONDITION    │ ── S9
         │  SETTING STEP                       │
         └────────────────┬───────────────────┘
         ┌────────────────────────────────────┐
         │  OPTIMIZATION ANALYSIS STEP         │ ── S11
         └────────────────┬───────────────────┘
                    ┌───────────┐
                    │    END    │
                    └───────────┘
```

analysis condition (S11).

**Description**

Field

The present invention relates to an optimization analysis method, device and program for joining positions of an automotive body, and a manufacturing method of an automotive body. In particular, the present invention relates to an optimization analysis method, device and program for joining positions of an automotive body, and a manufacturing method of an automotive body for obtaining optimum positions of weld lines that improve stiffness of an automotive body of an automobile and fatigue life in the vicinity of the weld lines for bonding and joining a parts assembly in the automotive body.

Background

In recent years, weight reduction of automotive bodies due to environmental problems has been promoted particularly in the automobile industry, and analysis by computer aided engineering (hereinafter, referred to as "CAE analysis") has become essential technology for the design of automotive bodies. In CAE analysis, it is known that stiffness improvement or weight reduction is achieved by using optimization technology such as mathematical optimization, sheet thickness optimization, shape optimization, and topology optimization.

A structural body such as an automotive body is formed by bonding and joining a plurality of parts as parts assembly by welding or the like, and it is known that stiffness of the entire automotive body is improved by increasing a joining amount at portions to be joined as parts assembly (for example, by increasing the number of continuous weld lines by electric arc welding or laser welding). If the stiffness is improved, stress generated in the parts in general is also suppressed, and the fatigue life of the parts tends to be improved. However, conversely, there are also cases where the fatigue life is reduced due to a local stress increase. Furthermore, from the viewpoint of the manufacturing cost of the automotive body, it is desirable to reduce the joining amount as much as possible. In addition, it is also required to arrange such an optimum welding position that simultaneously improve the fatigue performance for a plurality of input conditions.

Therefore, in order to improve the stiffness and the fatigue life of the automotive body while suppressing the manufacturing cost of the automotive body, a method of obtaining joining positions at which parts are bonded and joined together (continuously joined welding positions for laser or arc) is proposed. As this method, there are a method of determining joining positions by experience, intuition, or the like and a method of increasing the number of joining positions at a portion having a large stress by stress analysis to cope with the stress. In addition, in the case of handling a plurality of types of performance, there is a case where determination is made by a trial-and-error in which another performance evaluation is performed on a welding position disposed in order to satisfy a certain type of performance to confirm.

However, in the method of determining the joining positions by experience, intuition, or the like, positions of weld lines necessary for improving both the stiffness and the fatigue life are not obtained. For this reason, a position unnecessary for improving the stiffness and the fatigue life may be used as a weld line, and it must be said that the efficiency is poor in terms of cost due to repeated trial and error.

In addition, in the method of increasing the number of joining positions at a portion where the stress is large by the stress analysis, the stiffness and the fatigue life are modified as compared with those before the joining positions are obtained by this method; however, there are many cases where a local stress is increased with deformation of the portion being suppressed. For this reason, it cannot be said that the joining positions obtained by the method is necessarily optimal, and eventually, the design is based on trial and error, thereby resulting in poor efficiency.

On the other hand, Patent Literature 1 discloses optimization analysis method and device for joining positions of point joining, such as spot welding used for bonding and joining a plurality of parts included in a structural body model including two-dimensional elements and/or three-dimensional elements, or continuous joining such as laser welding, electric arc welding, or weld bond joining. In addition, Patent Literature 2 discloses continuous joining application site specifying device and method, for a structural body model, which easily specifies a site suitable for continuous joining without requiring complicated work in a structural body model including two-dimensional elements and/or three-dimensional elements constituting parts.

Citation List

Patent Literature

Patent Literature 1: JP 2013-025593 A
Patent Literature 2: JP 2016-71770 A

EP 4 501 749 A1

Summary

Technical Problem

During traveling of an automobile, a variable amplitude load in which the amplitude, the direction, and the like are not temporally constant but fluctuate complicatedly is input to the automotive body. Therefore, in a case where a complicated variable amplitude load is input to the automotive body, technology for obtaining an optimum length and arrangement of weld lines that can improve the stiffness of the automotive body and the fatigue life in the vicinity of continuous weld lines is desired. In chassis components or suspension parts of an automobile, there are many structural bodies in which parts are joined to each other by electric arc welding. However, it is known that the fatigue strength around an electric arc welded portion is not improved by the influence of notch geometry of an electric arc weld toe even if the base metal strength of parts is improved. Therefore, in the future, application expansion of high-tensile steel sheets is expected also for chassis components or suspension parts, and thus optimization of bonding and joining arrangement of electric arc welding is important. Meanwhile, in view of the need for weight reduction of an automotive body, in order to promote the weight reduction of the chassis components or suspension parts, improvement of the stiffness and the fatigue performance of the entire parts assembly of the chassis components or suspension parts by optimizing the bonding and joining arrangement of electric arc welding is an important issue.

However, the technology disclosed in Patent Literature 1 and Patent Literature 2 determines the optimum positions for point joining or continuous joining by setting the volume ratio of material, maximization of stiffness, minimization of displacement, minimization of stress, or others as analysis conditions for performing optimization calculation and does not take into consideration an improvement in the fatigue life of point joining or continuous joining. In addition, the technology disclosed in Patent Literature 2 is intended mainly for automobile bodies to be joined by spot welding and specifies a spot joining element having a spot joining interval less than or equal to a predetermined value as a portion suitable for continuous joining, and there is also a problem that the technology cannot be applied to chassis components or suspension parts of automobiles in which parts are continuously joined by electric arc welding or the like.

The present invention has been made in view of the above issues, and an object of the present invention is to provide an optimization analysis method, device and program for joining positions of an automotive body, and a manufacturing method of an automotive body that can obtain optimal arrangement of weld lines that minimizes the lengths of the weld lines and simultaneously achieve weight reduction of a part not contributing to improvement of the stiffness in a case where a simple or variable amplitude load is input to the automotive body of the automobile while improving stiffness of the automotive body and the fatigue life of a continuous weld line for bonding and joining of a parts assembly in the automotive body. Solution to Problem

To solve the problem and achieve the object, an optimization analysis method for joining positions of an automotive body according to the present invention is the method causing a computer to execute following steps on a whole or a part of an automotive body model having a plurality of part models including a beam element and a two-dimensional element, the automotive body model having initial weld lines for bonding and joining the plurality of part models as a parts assembly, to perform optimization analysis: to obtain an optimal arrangement of weld lines that achieve, as a purpose, any of improvement of stiffness of the automotive body model, improvement of a fatigue life in a vicinity of the weld lines for bonding and joining of the parts assembly in the automotive body model, and minimization of lengths of the weld lines; and to obtain an optimized shape of the part model having low sensitivity to stiffness performance. The method includes: an analysis object model setting step of setting the whole or a part of the automotive body model as an analysis object model; a weld line optimization analysis model generating step of generating a weld line optimization analysis model in which all candidates for weld lines that are candidates for the weld lines of the optimum arrangement are set for the analysis object model; a variable amplitude loading condition setting step of dividing a variable amplitude load applied to the weld line optimization analysis model into loading conditions of a plurality of different vibration patterns and setting a variable amplitude loading condition in which a predetermined number of cycles of a loading condition of each of the vibration patterns are combined to form one sequence; a target fatigue life setting step of setting a target fatigue life of the weld line optimization analysis model by the number of sequences of the variable amplitude loading condition; a part stiffness sensitivity analysis step of setting objectives related to stiffness performance of the weld line optimization analysis model, constraints related to a volume of the part model included in the weld line optimization analysis model, and the variable amplitude loading condition to be applied to the weld line optimization analysis model, performing sensitivity analysis of the part model included in the weld line optimization analysis model that satisfies the objectives under the variable amplitude loading condition and the constraints, and selecting a low-stiffness-sensitivity part model having low sensitivity to the stiffness performance on a basis of sensitivity of the part model; a weld line and part shape optimization analysis model generating step of generating a weld line and part shape optimization analysis model in which the candidates for weld lines of the weld line optimization analysis model and a two-dimensional element included in the low-stiffness-sensitivity part model are set as a design space; an optimization analysis condition setting step of, in order to perform an optimization analysis in which the weld line and part shape optimization analysis model is set as an optimization

3

object, obtaining a number of cycles to failure in a vicinity of each candidate for weld line for each loading condition of one of the vibration patterns, obtaining, as a linear cumulative damage of each candidate for weld line, a sum of ratios of numbers of cycles of the loading conditions of the respective vibration patterns to the respective numbers of cycles to failure for the number of sequences of the variable amplitude loading condition set in the target fatigue life setting step, setting a condition regarding the linear cumulative damage of the candidate for weld line to be left by the optimization analysis, a condition regarding stiffness of the weld line and part shape optimization analysis model, and a condition regarding a length of the candidate for weld line to be left by the optimization analysis as objectives or constraints that are optimization analysis conditions, and setting constraints regarding a volume constraint ratio of the low-stiffness-sensitivity part model; and an optimization analysis step of applying the variable amplitude loading condition set in the variable amplitude loading condition setting step to the weld line and part shape optimization analysis model, performing the optimization analysis under the optimization analysis conditions, obtaining, as the optimal arrangement of the weld lines, an arrangement of the candidates for weld lines which achieves, as a purpose, any of reduction in the linear cumulative damage of the candidates for weld lines, improvement of the stiffness of the optimization analysis model, and minimization of a length of the candidate for weld line to be left, and obtaining a remaining shape of the low-stiffness-sensitivity part model as an optimized shape of the part model having low sensitivity to the stiffness performance.

Moreover, the optimization analysis step may perform optimization analysis by topology optimization by densimetry, wherein discretization may be performed by setting a penalty coefficient to greater than or equal to 4 in the topology optimization.

Moreover, an optimization analysis device for joining positions of an automotive body according to the present invention is the device causing a computer to execute following steps on a whole or a part of an automotive body model having a plurality of part models including a beam element and a two-dimensional element, the automotive body model having initial weld lines for bonding and joining the plurality of part models as a parts assembly, to perform optimization analysis: to obtain an optimal arrangement of weld lines that achieve, as a purpose, any of improvement of stiffness of the automotive body model, improvement of a fatigue life in a vicinity of the weld lines for bonding and joining of the parts assembly in the automotive body model, and minimization of lengths of the weld lines; and to obtain an optimized shape of the part model having low sensitivity to stiffness performance. The device includes: an analysis object model setting unit that sets the whole or a part of the automotive body model as an analysis object model; a weld line optimization analysis model generating unit that generates a weld line optimization analysis model in which all candidates for weld lines that are candidates for the weld lines of the optimum arrangement are set for the analysis object model; a variable amplitude loading condition setting unit that divides a variable amplitude load applied to the weld line optimization analysis model into loading conditions of a plurality of different vibration patterns and sets a variable amplitude loading condition in which a predetermined number of cycles of a loading condition of each of the vibration patterns are combined to form one sequence; a target fatigue life setting unit that sets a target fatigue life of the weld line optimization analysis model by the number of sequences of the variable amplitude loading condition; a part stiffness sensitivity analysis unit that sets objectives related to stiffness performance of the weld line optimization analysis model, constraints related to a volume of the part model included in the weld line optimization analysis model, and the variable amplitude loading condition to be applied to the weld line optimization analysis model, performs sensitivity analysis of the part model included in the weld line optimization analysis model that satisfies the objectives under the variable amplitude loading condition and the constraints, and selects a low-stiffness-sensitivity part model having low sensitivity to the stiffness performance on a basis of sensitivity of the part model; a weld line and part shape optimization analysis model generating unit that generates a weld line and part shape optimization analysis model in which the candidates for weld lines of the weld line optimization analysis model and a two-dimensional element included in the low-stiffness-sensitivity part model are set as a design space; an optimization analysis condition setting unit that, in order to perform an optimization analysis in which the weld line and part shape optimization analysis model is set as an optimization object, obtains a number of cycles to failure in a vicinity of each candidate for weld line for each loading condition of one of the vibration patterns, obtains, as a linear cumulative damage of each candidate for weld line, a sum of ratios of numbers of cycles of the loading conditions of the respective vibration patterns to the respective numbers of cycles to failure for the number of sequences of the variable amplitude loading condition set in the target fatigue life setting unit, sets a condition regarding the linear cumulative damage of the candidate for weld line to be left by the optimization analysis, a condition regarding stiffness of the weld line and part shape optimization analysis model, and a condition regarding a length of the candidate for weld line to be left by the optimization analysis as objectives or constraints that are optimization analysis conditions, and sets constraints regarding a volume constraint ratio of the low-stiffness-sensitivity part model; and an optimization analysis unit that applies the variable amplitude loading condition set by the variable amplitude loading condition setting unit to the weld line and part shape optimization analysis model, performs the optimization analysis under the optimization analysis conditions, obtains, as the optimal arrangement of the weld lines, an arrangement of the candidates for weld lines which achieves, as a purpose, any of reduction in the linear cumulative damage of the candidates for weld lines, improvement of the stiffness of the optimization analysis model, and minimization of a length of the candidate for weld line to be left, and obtains a remaining shape of the low-stiffness-sensitivity part model as an optimized shape of the part model having low sensitivity to the stiffness performance.

Moreover, the optimization analysis unit may perform optimization analysis by topology optimization by densimetry, wherein discretization may be performed by setting a penalty coefficient to greater than or equal to 4 in the topology optimization.

Moreover, an optimization analysis program for joining positions of an automotive body according to the present invention is the program for performing, on a whole or a part of an automotive body model having a plurality of part models including a beam element and a two-dimensional element, the automotive body model having initial weld lines for bonding and joining the plurality of part models as a parts assembly, optimization analysis: to obtain an optimal arrangement of weld lines that achieve, as a purpose, any of improvement of stiffness of the automotive body model, improvement of a fatigue life in a vicinity of the weld lines for bonding and joining of the parts assembly in the automotive body model, and minimization of lengths of the weld lines; and to obtain an optimized shape of the part model having low sensitivity to stiffness performance. The program causes a computer to function as: an analysis object model setting unit that sets the whole or a part of the automotive body model as an analysis object model; a weld line optimization analysis model generating unit that generates a weld line optimization analysis model in which all candidates for weld lines that are candidates for the weld lines of the optimum arrangement are set for the analysis object model; a variable amplitude loading condition setting unit that divides a variable amplitude load applied to the weld line optimization analysis model into loading conditions of a plurality of different vibration patterns and sets a variable amplitude loading condition in which a predetermined number of cycles of a loading condition of each of the vibration patterns are combined to form one sequence; a target fatigue life setting unit that sets a target fatigue life of the weld line optimization analysis model by the number of sequences of the variable amplitude loading condition; a part stiffness sensitivity analysis unit that sets objectives related to stiffness performance of the weld line optimization analysis model, constraints related to a volume of the part model included in the weld line optimization analysis model, and the variable amplitude loading condition to be applied to the weld line optimization analysis model, performs sensitivity analysis of the part model included in the weld line optimization analysis model that satisfies the objectives under the variable amplitude loading condition and the constraints, and selects a low-stiffness-sensitivity part model having low sensitivity to the stiffness performance on a basis of sensitivity of the part model; a weld line and part shape optimization analysis model generating unit that generates a weld line and part shape optimization analysis model in which the candidates for weld lines of the weld line optimization analysis model and a two-dimensional element included in the low-stiffness-sensitivity part model are set as a design space; an optimization analysis condition setting unit that, in order to perform an optimization analysis in which the weld line and part shape optimization analysis model is set as an optimization object, obtains a number of cycles to failure in a vicinity of each candidate for weld line for each loading condition of one of the vibration patterns, obtains, as a linear cumulative damage of each candidate for weld line, a sum of ratios of numbers of cycles of the loading conditions of the respective vibration patterns to the respective numbers of cycles to failure for the number of sequences of the variable amplitude loading condition set in the target fatigue life setting unit, sets a condition regarding the linear cumulative damage of the candidate for weld line to be left by the optimization analysis, a condition regarding stiffness of the weld line and part shape optimization analysis model, and a condition regarding a length of the candidate for weld line to be left by the optimization analysis as objectives or constraints that are optimization analysis conditions, and sets constraints regarding a volume constraint ratio of the low-stiffness-sensitivity part model; and an optimization analysis unit that applies the variable amplitude loading condition set by the variable amplitude loading condition setting unit to the weld line and part shape optimization analysis model, performs the optimization analysis under the optimization analysis conditions, obtains, as the optimal arrangement of the weld lines, an arrangement of the candidates for weld lines which achieves, as a purpose, any of reduction in the linear cumulative damage of the candidates for weld lines, improvement of the stiffness of the optimization analysis model, and minimization of a length of the candidate for weld line to be left, and obtains a remaining shape of the low-stiffness-sensitivity part model as an optimized shape of the part model having low sensitivity to the stiffness performance.

Moreover, the optimization analysis unit may perform optimization analysis by topology optimization by densimetry, wherein discretization may be performed by setting a penalty coefficient to greater than or equal to 4 in the topology optimization.

Moreover, a manufacturing method of an automotive body according to the present invention is the manufacturing method in which weld lines for bonding and joining a parts assembly in the automotive body are optimally arranged to improve stiffness of the automotive body and a fatigue life of the weld lines. The manufacturing method includes: obtaining an optimized shape of the part model having low sensitivity to stiffness performance and an optimum arrangement of the weld lines by using the optimization analysis method for joining positions of the automotive body according to the present invention; changing a shape of a corresponding automotive body part on a basis of the optimized shape of the part model; determining a joining position of the parts assembly in the automotive body on a basis of the obtained optimum arrangement of the weld lines; and bonding and joining the parts assembly of the automotive body at the determined joining position.

Advantageous Effects of Invention

In the present invention, the whole or a part of an automotive body model of an automobile is used as an analysis object model, an optimization analysis model in which candidates for weld lines to be joined as a parts assembly is set to the analysis object model is generated, and optimization analysis conditions (objectives or constraints) regarding the lengths of the candidates for weld lines to be optimized, the fatigue life of the candidates for weld lines, the stiffness of the optimization analysis model, and the lengths of the weld lines are set to perform optimization analysis on the candidates for weld lines. As a result, in a case where a variable amplitude load, which is a non-constant load in terms of time, is input to the automotive body as in actual traveling of an automobile, it is possible to obtain optimum the position of a weld line that can achieve, as a purpose, any of minimization of the length of the candidate for weld line, improvement of the stiffness of the analysis object model, and improvement of the fatigue life in the vicinity of the weld line for bonding and joining of a parts assembly, and at the same time, it is possible to achieve weight reduction of a part that does not contribute to the stiffness improvement. As a result, this makes it possible to optimally arrange welding (bonding and joining) positions such as electric arc welding in the automotive body structure, to improve the fatigue life in the vicinity of the weld line, to improve the stiffness of the automotive body, and to reduce the weight of the automotive body structure, thereby enabling reduction in the welding cost and improvement of stiffness and weight reduction of the automotive body.

Brief Description of Drawings

FIG. 1 is a block diagram of an optimization analysis device of joining positions of an automotive body according to a first embodiment of the present invention.

FIG. 2 is a diagram illustrating a rear subframe model as an analysis object model in the first embodiment of the present invention.

FIG. 3 is a diagram illustrating initial weld lines preset in the rear subframe model as an example of the analysis object model in the first embodiment of the present invention.

FIG. 4 is a diagram illustrating an example of an electric arc welded portion in which the initial weld lines are modeled in calculation of the fatigue life of the initial weld lines in the first embodiment of the present invention.

FIG. 5 is a diagram illustrating an example of loading conditions and constraint conditions of a first vibration pattern and a second vibration pattern given to the rear subframe model serving as the analysis object model in the first embodiment of the present invention.

FIG. 6 is a diagram illustrating an example of an optimization analysis model in which initial weld lines preset in the analysis object model and an additional weld line added to the analysis object model are set as candidates for weld lines in the first embodiment of the present invention ((a) Entire optimization analysis model, (b) Partial enlarged view of optimization analysis model).

FIG. 7 is a diagram illustrating an example of a variable amplitude loading condition set in the first embodiment of the present invention.

FIG. 8 is a diagram for describing an S-N diagram (stress endurance diagram) used for calculating a fatigue life under the variable amplitude loading condition in the first embodiment.

FIG. 9 is a diagram illustrating an example of results of the fatigue life of the initial weld lines under the variable amplitude loading condition and positions of the initial weld lines having top three minimum fatigue lives (minimum fatigue lives) in the first embodiment of the present invention. Illustrated in FIG. 9(b) is a state in which the rear subframe model is viewed from below.

FIG. 10 is a diagram illustrating a result of sensitivity analysis on stiffness performance for the rear subframe model in the first embodiment of the present invention ((a) Variable amplitude loading condition (input 1) and (b) Variable amplitude loading condition (input 2)).

FIG. 11 is a diagram illustrating an example of weld lines and mesh density distributions of part shapes after optimization analysis in which the rear subframe model is set as an analysis object and optimization analysis conditions regarding the stiffness and the fatigue life are set in the first embodiment of the invention and Examples ((a) Variable amplitude loading condition (input 1) and (b) Variable amplitude loading condition (input 2)). In FIG. 11, only elements set as a design space are illustrated.

FIG. 12 is a diagram illustrating an example of weight reduction of a part shape based on the result of the optimization analysis illustrated in FIG. 11.

FIG. 13 is a flowchart illustrating a flow of processing in the optimization analysis method for joining positions of the automotive body according to the first embodiment of the present invention.

FIG. 14 is an explanatory diagram of stiffness evaluation points in the rear subframe model that is a part of an automotive body model set as the analysis object in the Examples.

FIG. 15 is a diagram illustrating optimal arrangement of weld lines obtained by optimization analysis in an example of the invention in which the rear subframe model is set as the analysis object and optimization analysis conditions regarding the stiffness, the joining length, and the volume constraint ratio of a low-sensitivity part are set in Examples.

FIG. 16 is a diagram illustrating optimal arrangement of weld lines obtained by optimization analysis in a comparative example in which a rear subframe model is set as an analysis object and optimization analysis conditions regarding stiffness and a joining length are set in Examples.

Description of Embodiments

Prior to description of an optimization analysis method, device and program for joining positions of an automotive body according to a first embodiment of the present invention and a manufacturing method of an automotive body according to a second embodiment, an automotive body model targeted in the present invention will be described. In the specification and the drawings of the present application, the front-rear direction of an automotive body, the left-right direction of the automotive body, and the up-down direction of the automotive body are referred to as an X direction, a Y direction, and a Z direction, respectively. In the present specification and the drawings, elements having substantially the same functions and configurations are denoted by the same reference numerals, and redundant description is omitted.

<Automotive Body Model And Analysis Object Model>

An automotive body model targeted in the present invention includes a plurality of part models such as body's frame parts and chassis components, and these part models are modeled using beam elements and two-dimensional elements.

In general, since the body's frame parts, the chassis components, and the like are mainly formed of a metal sheet having a thin sheet thickness, the part models included in the automotive body model may be formed only of two-dimensional elements.

The automotive body model further has initial weld lines that join a plurality of part models as a parts assembly. An initial weld line is obtained by modeling a weld line of electric arc welding or laser welding for bonding and joining a plurality of automobile parts as a parts assembly using a two-dimensional element or a three-dimensional element.

For example, in a case where two part models including two-dimensional elements are bonded and joined by initial weld lines modeled by two-dimensional elements, the two-dimensional elements of the initial weld lines are joined to both the two-dimensional elements of the two part models.

In addition, in a case where the initial weld lines are modeled by three-dimensional elements, the two-dimensional elements of the part models and the three-dimensional elements of the initial weld lines are coupled by rigid body elements in order to distribute the translational force acting on the initial weld lines to the part models.

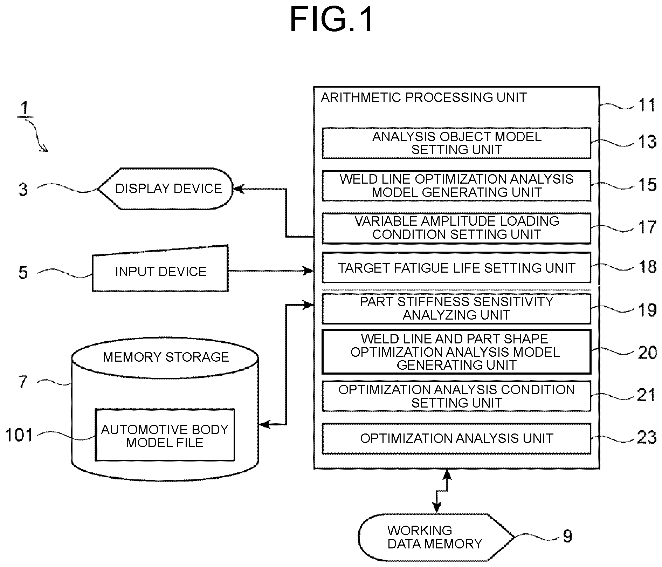

Since the present invention is for analysis of deformation generated when a variable amplitude load acts on an analysis object model (described later) which is the whole or a part of an automotive body model, each part model in the automotive body model is modeled as an elastic body, a viscoelastic body, or an elastic-plastic body. Moreover, the material property and element information of each part model included in the automotive body model, and information regarding the initial weld lines and the like in each parts assembly are stored in an automotive body model file 101 (see FIG. 1).

[First Embodiment]

<Optimization Analysis Device for Joining Positions of Automotive Body>

The configuration of an optimization analysis device for joining positions of an automotive body (hereinafter, simply referred to as an "optimization analysis device") according to a first embodiment of the present invention will be described below.

The optimization analysis device is a device that uses the whole or a part of an automotive body model as an analysis object model and performs optimization analysis to obtain the optimal arrangement of weld lines that achieve, as a purpose, for the analysis object model, any of improvement of the stiffness of the automotive body model, improvement of the fatigue life of the weld lines for bonding and joining of a parts assembly in the automotive body model, and minimization of the lengths of the weld lines.

FIG. 1 illustrates an exemplary configuration of an optimization analysis device 1 according to the first embodiment. The optimization analysis device 1 includes a personal computer (PC) or the like and, as illustrated in FIG. 1, includes a display device 3, an input device 5, a memory storage 7, a working data memory 9, and an arithmetic processing unit 11. The display device 3, the input device 5, the memory storage 7, and the working data memory 9 are connected to the arithmetic processing unit 11, and individual functions are executed by a command from the arithmetic processing unit 11. Hereinafter, the function of each component of the optimization analysis device 1 according to the first embodiment will be described.

<<Display Device>>

The display device 3 is used for displaying an automotive body model, an analysis object model, an analysis result, and the like, and includes a liquid crystal monitor (LCD monitor) or the like.

<<Input Device>>

The input device 5 is used for reading an automotive body model file 101 (FIG. 1), inputting an instruction by an operator such as displaying the automotive body model and the analysis object model, and others, and includes a keyboard, a mouse, and the like.

<<Memory Storage>>

The memory storage 7 is used for storing various files such as the automotive body model file 101 (FIG. 1) and analysis results and for others and includes a hard disk or the like.

<<Working Data Memory>>

The working data memory 9 is used for temporary storage or calculation of data used by the arithmetic processing unit 11 and includes a random access memory (RAM) or the like.

<<Arithmetic Processing Unit>>

As illustrated in FIG. 1, the arithmetic processing unit 11 includes an analysis object model setting unit 13, a weld line optimization analysis model generating unit 15, a variable amplitude loading condition setting unit 17, a target fatigue life setting unit 18, a part stiffness sensitivity analyzing unit 19, a weld line and part shape optimization analysis model generating unit 20, an optimization analysis condition setting unit 21, and an optimization analysis unit 23 and is configured by a central processing unit (CPU) of a PC or the like. Each of these units functions with the CPU executing a predetermined program. The functions of the above units in the arithmetic processing unit 11 will be described below.

(Analysis Object Model Setting Unit)

The analysis object model setting unit 13 acquires an automotive body model from the automotive body model file 101 and sets the whole or a part of the acquired automotive body model as an analysis object model.

An example of processing by the analysis object model setting unit 13 will be described below. First, an operator instructs from the input device 5 to read the automotive body model from the automotive body model file 101, whereby the automotive body model is read from the memory storage 7. Next, the automotive body model is displayed on the display device 3 according to the instruction of the operator. Then, a portion to be subjected to optimization analysis in the automotive body model displayed on the display device 3 is designated by the instruction of the operator. The analysis object model setting unit 13 sets the designated portion as the analysis object model.

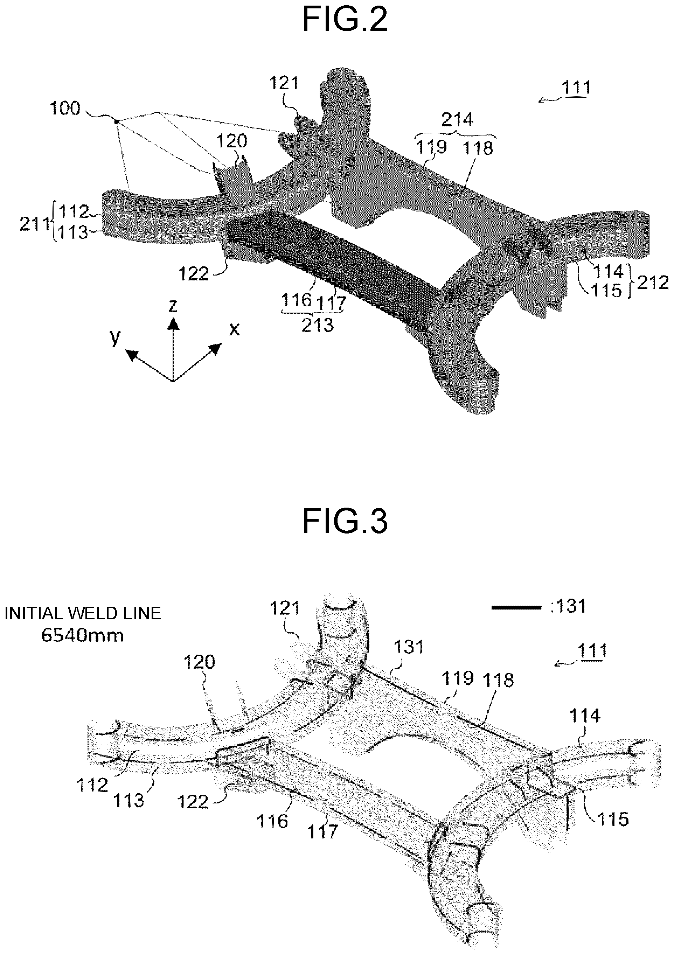

Illustrated in FIG. 2 is an example in which a rear subframe model 111, in which a rear suspension subframe (hereinafter, rear subframe) which is a rear chassis component is simplified, is set the analysis object model.

In the rear subframe model 111 illustrated in FIG. 2, as part models, a subframe upper 112 and a subframe lower 113 on the right side are joined by electric arc welding to form a subframe R 211. Similarly, a subframe upper 114 and a subframe lower 115 on the left side are joined to by electric arc welding to form a subframe L 212. A cross member upper 116 and a cross member lower 117 on the front side of the automotive body are joined by electric arc welding to form a cross member front 213. A cross member front 118 on the rear side of the automotive body and a cross member rear 119 are joined by electric arc welding to form a rear cross member 214. The subframe R 211, the subframe L 212, the cross member front 213, and the rear cross member 214 are further joined by electric arc welding to form a parallel cross structure. Brackets 120, 121, and 122, which are parts for supporting a suspension or parts for attaching a link mechanism to a tire, are joined to the parallel cross structure by electric arc welding. (Although only the right side is illustrated in FIG. 2, similar brackets are attached to the left side as well.) Each of these part models is modeled by two-dimensional elements. In FIG. 2, a part connecting a tire input point 100, the brackets 120, 121, and 122, and the rear cross member 214 is simplified by straight lines indicating bar elements.

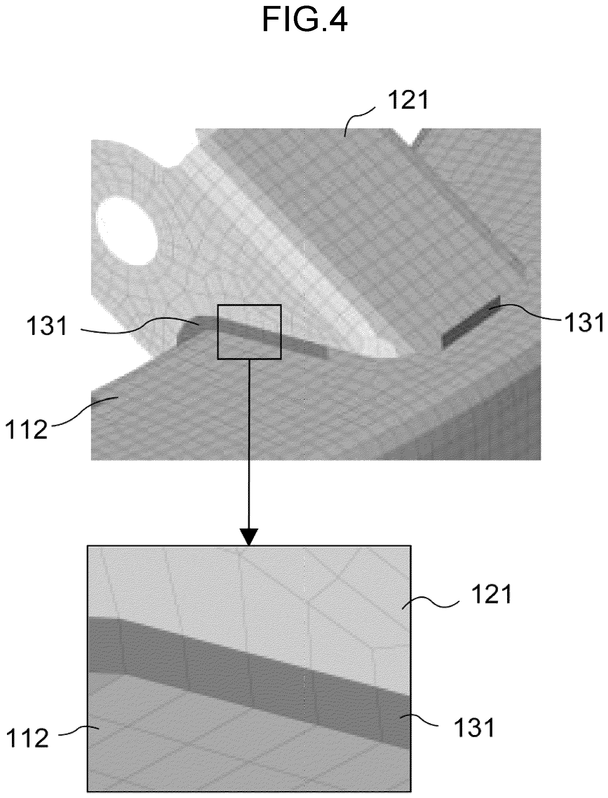

Furthermore, as illustrated in FIG. 3, in the rear subframe model 111, initial weld lines 131 for joining the part models as a parts assembly are set in advance, and the length of an initial weld line is 6540 mm. Furthermore, as illustrated in FIG. 4, an initial weld line 131 is modeled by a two-dimensional element that is connected to a two-dimensional element of a part model with shared nodes. The thickness of an initial weld line 131 is the thinner one of the plate thicknesses of the part models to be joined together. Furthermore, the material property value of the initial weld line 131 is similar to that of the part model.

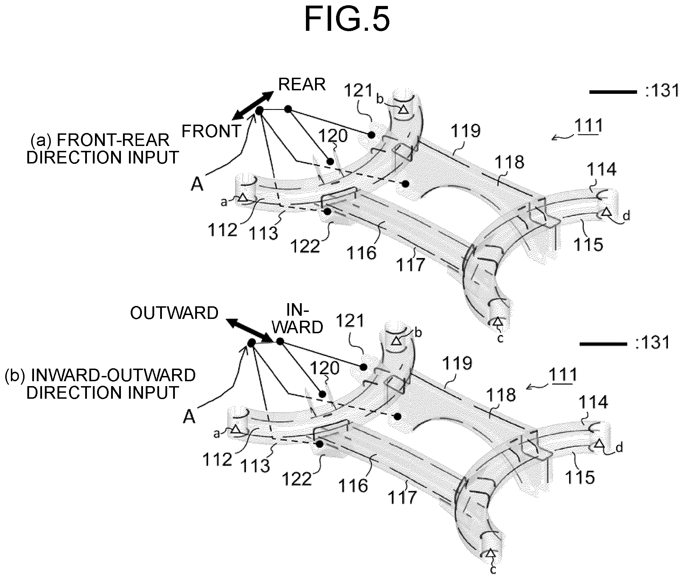

In order to set a variable amplitude loading condition and a constraint condition to be applied to the rear subframe model 111 by the variable amplitude loading condition setting unit 17 to be described later, as illustrated in FIG. 5, the brackets 120, 121, and 122, the rear cross member 214, and the tire input point 100 (see FIG. 2) are coupled by bar elements. The tire input point 100 is set as a load input point A, and four points of mount bushings a, b, c, and d in the drawing are set as complete restraint points.

(Weld Line Optimization Analysis Model Generating Unit)

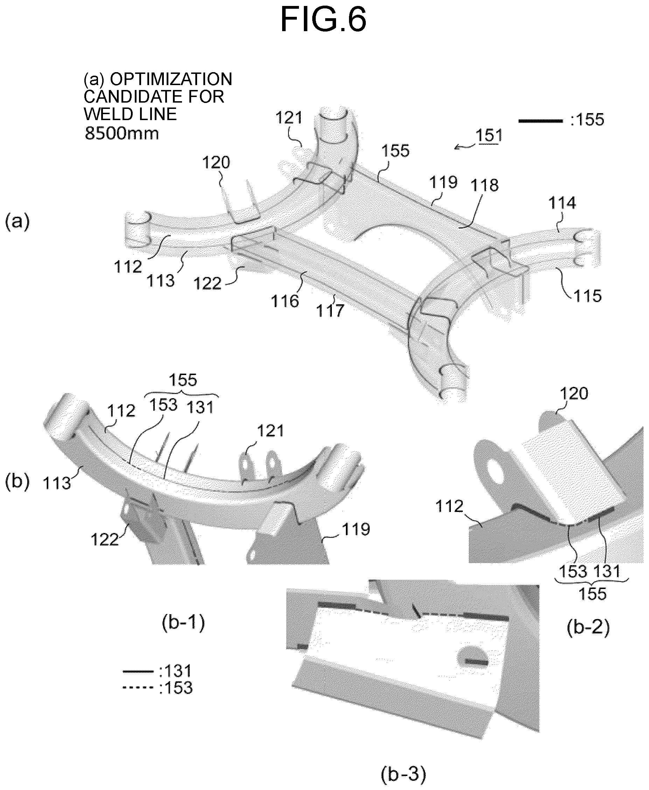

As illustrated in FIG. 6, the weld line optimization analysis model generating unit 15 generates a weld line optimization analysis model 151 in which all the candidates for weld lines that are candidates for weld lines in the optimum arrangement in the analysis object model, namely, the maximum number of candidates for weld lines that can be set are set.

Illustrated in FIG. 6 is the weld line optimization analysis model 151 generated by setting candidates for weld lines 155 in the rear subframe model 111. FIG. 6(b) is a diagram illustrating a part of the weld line optimization analysis model 151 in an enlarged manner. A solid line indicates an initial weld line 131, and a broken line indicates an additional weld line 153. In FIG. 6(a), the initial weld line 131 and the additional weld line 153 are illustrated as a candidate for weld line 155. There may be cases where the additional weld line 153 is set by modifying the part shape in cases where the additional weld line 153 is added so as to connect intermittently set initial weld lines 131 (b-1 and b-2), where the additional weld line 153 is set by extending an end of an initial weld line 131 (b-3), or where there is no space for setting the additional weld line 153. Similarly to the initial weld lines 131 described above, the additional weld lines 153 may be modeled by a two-dimensional element or may be modeled by a three-dimensional element.

(Variable Amplitude Loading Condition Setting Unit)

The variable amplitude loading condition setting unit 17 divides the variable amplitude load applied to the optimization analysis model into loading conditions of a plurality of different vibration patterns and sets a variable amplitude loading condition in which a predetermined number of cycles of a loading condition of each of the vibration patterns are combined to form one sequence.

The variable amplitude load is obtained by dividing vibration patterns having one or more different magnitudes, positions, or directions of the amplitude load input to the analysis object model and combining a predetermined number of cycles of each vibration pattern. The variable amplitude load simulates a variable amplitude load that is input to the automotive body when an actual automobile travels, the variable amplitude load varying with time. The variable amplitude loading condition is given in calculation of the fatigue life of initial weld lines 131 or candidates for weld lines 155 described later.

The variable amplitude loading condition setting unit 17 may divide variable amplitude loads into loads of a plurality of different vibration patterns and set a variable amplitude loading condition obtained by combining the loads and a constraint condition for constraining an analysis object model for each variable amplitude loading condition.

In the first embodiment, the variable amplitude loading condition includes a loading condition of a first vibration pattern in which a variable amplitude load of $\pm 2.5$ kN is input in the front-rear direction (input 1) as illustrated in FIG. 5(a) and a condition of a second vibration pattern in which a variable amplitude load of $\pm 6.0$ kN is input in the inward-outward direction (input 2) as illustrated in FIG. 5(b), in the rear subframe model 111 with the mount bushings a to d to be attached to the automotive body being completely restrained and the tire input point 100 on the right side of the automotive body set as the load input point A.

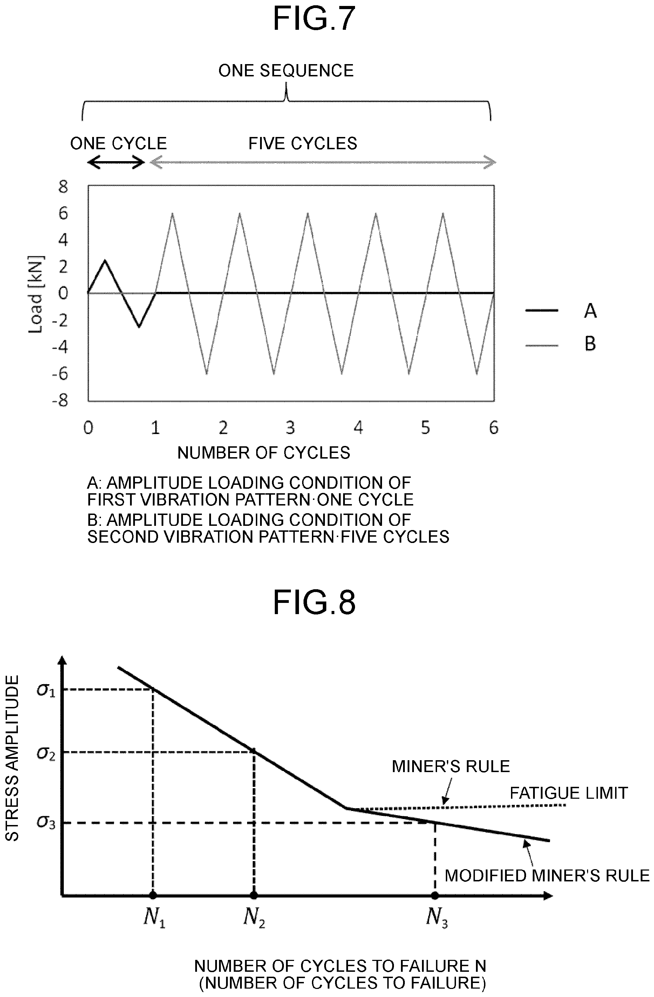

As in the schematic diagram of a variable amplitude load history illustrated in FIG. 7, one sequence of variable amplitude loading condition is obtained by combining one cycle of the loading condition of the first vibration pattern and five cycles of the loading condition of the second vibration pattern. Then, the fatigue life under the loaded variable condition is examined. The graph illustrated in FIG. 7 schematically illustrates a reversed variable load, in which the magnitude of the load in each of the loading condition of the first vibration pattern and the loading condition of the second vibration pattern is set as the amplitude, in order to show the number of cycles of each of the loading condition of the first vibration pattern and the loading condition of the second vibration pattern under the variable amplitude loading condition of one sequence.

(Target Fatigue Life Setting Unit)

The target fatigue life setting unit 18 sets the target fatigue life of the weld line optimization analysis model 151 by the number of sequences under the variable amplitude loading condition.

As the target fatigue life of the weld line optimization analysis model 151, the loading conditions of the vibration patterns under the variable amplitude loading conditions set by the variable amplitude loading condition setting unit 17 is given to the analysis object model to separately perform stress analysis, the fatigue life is calculated using commercially available fatigue life prediction software, and a target fatigue life is set on the basis of the shortest fatigue life. In addition, a predetermined number of sequences may be set as the target fatigue life of the weld line optimization analysis model 151 from a conventional empirical rule.

In general, since the load input to the actual automotive body of an automobile is not constant in terms of time, the initial weld line 131 can be deemed as being in a stress state in which stresses of various amplitudes are randomly generated. In order to evaluate the fatigue life of an initial weld line 131 in such a stress state, the linear cumulative damage rule is used.

In the linear cumulative damage rule, first, a state in which stresses of various amplitudes are randomly generated is considered to be a state in which stresses of different amplitudes such as $\sigma_1$, $\sigma_2$, $\sigma_3$...$\sigma_m$ are independently repeated. Next, based on the premise that the stress amplitudes $\sigma_1$, $\sigma_2$, $\sigma_3$,..., $\sigma_m$ are each generated independently, the numbers of cycles to fracture (fatigue fracture) $N_1$, $N_2$, $N_3$,..., $N_m$ (the number of cycles to failure) at the respective stress amplitudes are read from an S-N diagram as illustrated in FIG. 8. The damage degree when each of these stress amplitudes is repeated by $n_1$, $n_2$, $n_3$... $n_m$ cycles is deemed as $n_1/N_1$, $n_2/N_2$, $n_3/N_3$... $n_m/N_m$.

In the linear cumulative damage rule, as expressed in Equation (1), a liner cumulative damage dm, which is the sum of damage degrees at individual stress amplitudes, is obtained. When the linear cumulative damage dm $\geq$ 1 holds, the fatigue fracture occurs. In a variable amplitude loading condition under which an irregular cyclic variable amplitude load is applied, the stress amplitudes $\sigma_1$, $\sigma_2$, $\sigma_3$,..., $\sigma_m$ and the number of cycles $n_1$, $n_2$, $n_3$,... $n_m$ may be determined using the Rainflow Counting method.

$$dm = \sum_{i=1}^{m} \frac{n_i}{N_i} = \frac{n_1}{N_1} + \frac{n_2}{N_2} + \frac{n_3}{N_3} + \cdots + \frac{n_m}{N_m} \qquad \cdots (1)$$

A specific procedure for the target fatigue life setting unit 18 to calculate a target liner cumulative damage of an initial weld line 131 under the variable amplitude loading condition is as follows.

First, a stress acting on each initial weld line 131 obtained by performing the stress analysis for each loading condition of each vibration pattern under the variable amplitude loading condition is set to different stress amplitudes $\sigma_1$, $\sigma_2$, $\sigma_3$...$\sigma_m$ generated in the initial weld line 131 under the variable amplitude loading condition.

Next, the target fatigue life setting unit 18 obtains the numbers of cycles (the numbers of cycles to failure) $N_1$, $N_2$, $N_3$,..., and $N_m$ until the initial weld line 131 is broken when each stress amplitude independently occurs in the initial weld line 131 from the S-N diagram (FIG. 8).

Subsequently, the numbers of cycles to fracture (numbers of cycles to failure) $N_1$, $N_2$, $N_3$,...$N_m$ at each stress amplitude and the numbers of cycles $n_1$, $n_2$, $n_3$,...$n_m$ of the loading condition of each vibration pattern in one sequence of the variable amplitude loading condition are substituted into Equation (1) to calculate the linear cumulative damage dm in one sequence. Furthermore, the linear cumulative damage DM at the time when one sequence of the variable amplitude loading condition is continuously repeated K times (K sequences) is calculated from Equation (2). Then, the number of sequences K when the linear cumulative damage DM is greater than or equal to 1 is calculated as the fatigue life of the initial weld line 131 under the variable amplitude loading condition.

$$DM = \sum_{j=1}^{K} \sum_{i=1}^{m} \frac{n_i}{N_i} = \sum_{j=1}^{K} \left( \frac{n_1}{N_1} + \frac{n_2}{N_2} + \frac{n_3}{N_3} + \cdots + \frac{n_m}{N_m} \right) \qquad \cdots (2)$$

On the basis of the fatigue life of each initial weld line 131 calculated in this manner, the target fatigue life setting unit 18 sets a target fatigue life of the weld line optimization analysis model 151. The target fatigue life is a fatigue life to be satisfied by a candidate for weld line 155 (described later) remaining in the optimization analysis. In the first embodiment, the target fatigue life is set to be at least longer than or equal to the minimum fatigue life (minimum fatigue life) among fatigue lives of the initial weld lines 131 calculated by the target fatigue life setting unit 18.

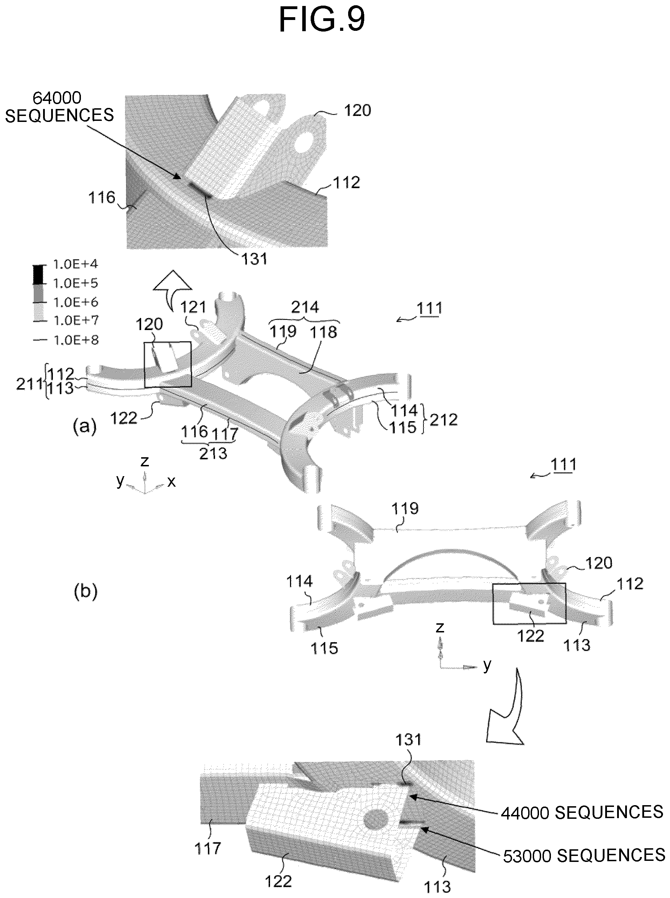

FIG. 9 is a diagram illustrating an example of results of the positions and fatigue lives of initial weld lines 131 having top three shortest fatigue lives among the fatigue lives of the initial weld lines 131 obtained using the results of the stress analysis in which the variable amplitude loading condition illustrated in FIG. 7 and the constraint condition illustrated in FIG. 5 are applied to the rear subframe model 111.

The fatigue lives of the initial weld lines 131 illustrated in FIG. 9 were calculated under a variable amplitude loading condition in which, in the rear subframe model 111, the mount bushings a to d to be attached to the automotive body were completely restrained, and the tire input point 100 on the right side of the automotive body was set as the load input point A, and one sequence was obtained by combining one cycle of the first vibration pattern in which a variable amplitude load of ±2.5 kN is input in the front-rear direction (input 1) and five cycles of a second vibration pattern in which a variable amplitude load of ±6.0 kN is input in the inward-outward direction (input 2).

The fatigue lives obtained for the initial weld lines 131 of the rear subframe model 111 were, as illustrated in FIG. 9, 44000 sequences and 53000 sequences for joining portions between the subframe lower 113 and the bracket 122, and 64000 sequences for a joining portion between the subframe upper 112 and the bracket 120, and these were three weld lines having the top three shortest fatigue lives. From this result, the target fatigue life setting unit 18 sets a fatigue life greater than or equal to the fatigue life of 44000 sequences of the initial weld line 131 joining the subframe lower 113 and the bracket 122 as the target fatigue life.

For calculation of the fatigue life by the target fatigue life setting unit 18, as described above, it suffices to use commercially available fatigue life prediction analysis software. For example, in a case where the fatigue life of an initial weld line 131 modeled by a two-dimensional element is calculated using commercially available fatigue life prediction analysis software, the fatigue life of the initial weld line 131 can be calculated by inputting conditions such as stress of the initial weld line 131 into the fatigue life prediction analysis software. As the stress of the initial weld line 131, a stress value of a two-dimensional element of each part model to which the two-dimensional element of the initial weld line 131 is coupled, or a nominal structure stress obtained from a force and a moment acting on both ends of the two-dimensional element of the initial weld line 131 can be used.

In addition, the S-N diagram may change depending on the loading state of the amplitude load, for example, whether an average stress is compressive stress or tensile stress even with the same stress amplitude; however, it suffices to refer to the value of the fatigue life prediction analysis software or experimental values. Alternatively, in a case where the fatigue life is calculated using the nominal structure stress, an S-N diagram of one line containing different loading states may be used. Furthermore, as illustrated in FIG. 8, the S-N diagram may be represented by applying various rules such as the Miner's rule in which fracture is not determined below a fatigue limit on the low stress side and a modified Miner's rule in which it is counted as damage even below the fatigue limit.

(Part Stiffness Sensitivity Analyzing Unit)

The part stiffness sensitivity analyzing unit 19 sets objectives related to stiffness performance of the weld line optimization analysis model 151, constraints related to the volume of a part model included in the weld line optimization analysis model 151, and a variable amplitude loading condition to be applied to the weld line optimization analysis model 151, performs sensitivity analysis of the part model included in the weld line optimization analysis model 151 that satisfies the objectives under the variable amplitude loading condition and the constraints, and selects a low-stiffness-sensitivity part model having low sensitivity to stiffness performance on the basis of the sensitivity of the part model.

In the first embodiment, examples of the objectives related to the stiffness performance set by the part stiffness sensitivity analyzing unit 19 include minimization of the sum of strain energy, minimization of displacement, minimization of maximum principal stress, and maximization of stiffness in the part model included in the weld line optimization analysis model 151. Furthermore, the constraints set by the part stiffness sensitivity analyzing unit 19 include a volume constraint ratio that defines a volume constraint ratio of the part model included in the weld line optimization analysis model 151. In addition, the part stiffness sensitivity analyzing unit 19 sets, for example, the variable amplitude loading conditions (input 1 and input 2) and the constraint condition illustrated in FIGS. 5(a) and 5(b) as the variable amplitude loading condition to be applied to the weld line optimization analysis model 151. Furthermore, the part stiffness sensitivity analyzing unit 19 uses densimetry in topology optimization to calculate, as the sensitivity, the density (mesh density) of each element (mesh model of two-dimensional elements) of the part model included in the weld line optimization analysis model 151 calculated by the topology optimization. The mesh density is a virtual density representing the filling state of a material in each of element and has a value in a range of 0 to 1. That is, if the element density is 1, it represents a state in which the element is fully filled with a material, if the element density is 0, it represents a state in which the element is not filled with a material and is completely hollow, and if the element density is an intermediate value between 0 and 1, it represents an intermediate state in which the element is neither a material nor hollow. Furthermore, in the mesh density calculated by the topology optimization, the mesh density has a value close to 1 in an element having a large contribution to the stiffness performance, which indicates high sensitivity to the stiffness performance. On the other hand, the element sensitivity has a value close to 0 in an element having a small contribution to the stiffness performance, which indicates low sensitivity to the stiffness performance. As described above, the mesh density calculated by the topology optimization serves as an index representing the sensitivity of each element with respect to the stiffness performance.

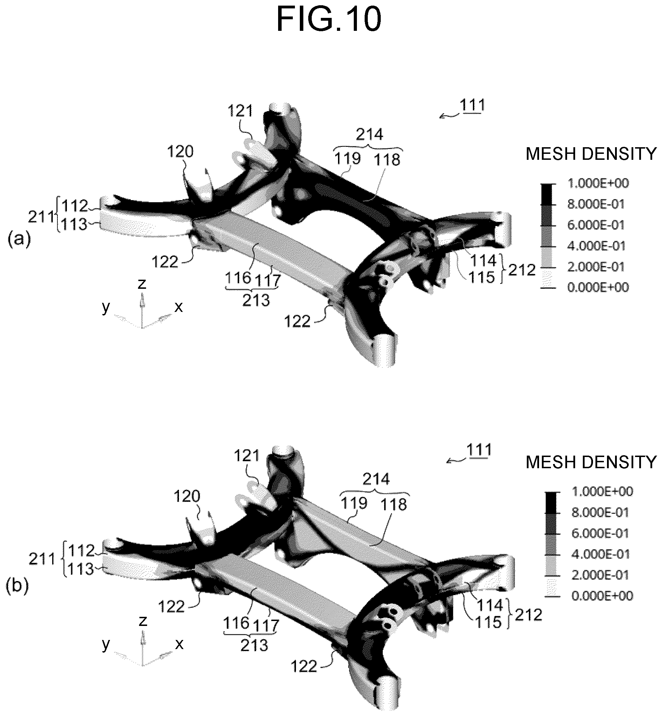

As an example of the sensitivity analysis of the part model included in the weld line optimization analysis model 151 calculated by the part stiffness sensitivity analyzing unit 19, the density (mesh density) of the part model included in the weld line optimization analysis model 151 calculated by topology optimization was calculated as sensitivity, using the densimetry in the topology optimization, by setting, as objectives related to the stiffness performance, minimization of the sum of strain energy in the part model include in the weld line optimization analysis model 151, as the constraints, a volume constraint ratio of the part model included in the weld line optimization analysis model 151 being 50%, and as the variable amplitude loading condition to be applied to the weld line optimization analysis model 151, setting the variable amplitude loading condition (input 1 and input 2) and the constraint condition illustrated in FIGS. 5(a) and 5(b). FIG. 10 illustrates an example of a result of the mesh density of the weld line optimization analysis model 151. FIG. 10(a) is a diagram illustrating a result of the variable amplitude loading condition (input 1), and FIG. 10(b) is a diagram illustrating a result of the variable amplitude loading condition (input 2). In the sensitivity analysis under the variable amplitude loading condition (input 1), the element densities of the cross member upper 116, the cross member lower 117, the bracket 122, and the like were 0.5 or less, which showed that the sensitivity was low. In the sensitivity analysis under the variable amplitude loading condition (input 2), it was found that the cross member front 118 and the cross member rear 119 are also low in sensitivity. Therefore, in this example, in the sensitivity analysis result, it was determined that parts of which total area of elements having a mesh density less than or equal to 0.5 occupies 50% or more of the surface area of all the parts were selected as low-stiffness-sensitivity part models, and as a result, the part models of the cross member upper 116, the cross member lower 117, the bracket 122, the cross member front 118, and the cross member rear 119 were selected as low-stiffness-sensitivity part models.

(Weld Line and Part Shape Optimization Analysis Model Generating Unit)

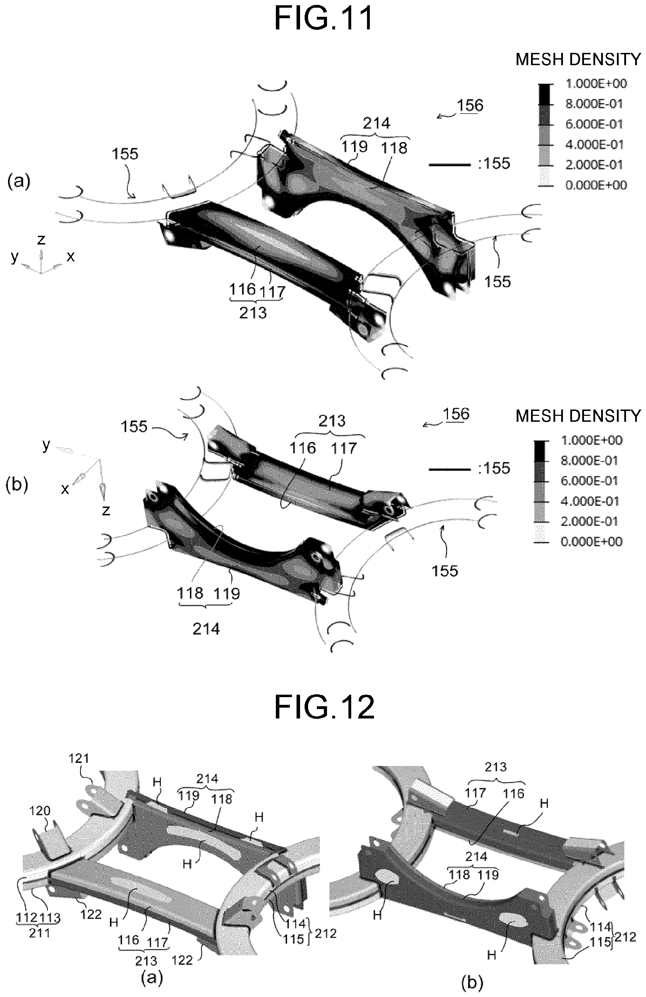

The weld line and part shape optimization analysis model generating unit 20 generates a weld line and part shape optimization analysis model 156 (see FIG. 11) in which the candidates for weld lines 155 of the weld line optimization analysis model 151 and two-dimensional elements included in the low-stiffness-sensitivity part models (part models of the cross member upper 116, the cross member lower 117, the bracket 122, the cross member front 118, and the cross member rear 119) are set as the design space.

(Optimization Analysis Condition Setting Unit)

In order to perform an optimization analysis in which the weld line and part shape optimization analysis model 156 is set as an optimization object, the optimization analysis condition setting unit 21 obtains the number of cycles to failure in the vicinity of each candidate for weld line 155 for each loading condition of a vibration pattern set by the variable amplitude loading condition setting unit 17, obtain, as a linear cumulative damage DM of each candidate for weld line 155, the sum of the ratios of the numbers of cycles of the loading conditions of the respective vibration patterns to the respective numbers of cycles to failure for the number of sequences of the variable amplitude loading condition set by the target fatigue life setting unit 18, sets a condition regarding the linear cumulative damage of a candidate for weld line 155 to be left by the optimization analysis, a condition regarding the stiffness of the weld line and part shape optimization analysis model 156, and a condition regarding the length of the candidate for weld line 155 to be left by the optimization analysis as the objectives or constraints that are optimization analysis conditions, and, furthermore, constraints regarding the volume constraint ratio of a low-stiffness-sensitivity part model are set.

There are two types of optimization analysis conditions, namely, objectives and constraints. Only one type of objectives is set depending on the purpose of the optimization analysis. Examples of the objectives include a condition related to the stiffness, a condition related to the fatigue life, and a condition related to the joining length.

As the condition regarding the stiffness, for example, a predetermined position in the analysis object model may be set as a stiffness evaluation point, and displacement or strain of the stiffness evaluation point may be used as an index. Moreover, in the variable amplitude loading condition, for example, minimization of the value obtained by adding up displacements of a stiffness evaluation point A under the loading condition of each vibration pattern or minimization of the displacement of the stiffness evaluation point A under the loading condition of each vibration pattern may be set as the condition regarding the stiffness. It suffices to set the condition related to the fatigue life to that the fatigue life be larger than the target fatigue life set by the target fatigue life setting unit 18. In addition, it suffices to set the joining length be, for example, a ratio with respect to the total joining length or the like.

The constraints are constraints imposed when the optimization analysis is performed, and a plurality of constraints is set as necessary.

In the first embodiment, it is preferable to set a condition that the fatigue life of a candidate for weld line 155 be larger than the target fatigue life set by the target fatigue life setting unit 18 as the constraints. The number of cycles to failure of a candidate for weld line 155 can be calculated using the S-N diagram illustrated in FIG. 8 similarly to the number of cycles to failure under the variable amplitude loading condition of the initial weld line 131 described above.

The condition related to the fatigue life is not limited to those in which the target fatigue life set by the target fatigue life setting unit 18 is applied as it is as constraints, and constraints, in which the linear cumulative damage DM for the number of sequences set as the target fatigue life by the target fatigue life setting unit 18 of the candidate for weld line 155 under the variable amplitude loading condition holds linear cumulative damage DM < 1 in which no fatigue fracture occurs, may be applied.

Similarly to the linear cumulative damage DM of the initial weld line 131 described above, the linear cumulative damage DM of the candidate for weld line 155 can be calculated using the S-N diagram illustrated in FIG. 8 and Equation (2) by using, for example, a stress of a two-dimensional element of a part model to which a two-dimensional element modeled as the candidate for weld line 155 is joined, a nominal structure stress calculated from a force and a moment acting on both ends of the two-dimensional element, and the like.

Furthermore, as the condition regarding the length of the candidate for weld line 155, the length of the candidate for weld line 155 to be left can be set to a predetermined value. In the first embodiment, the constraints that the length of the candidate for weld line 155 to be left be less than or equal to the length of the initial weld line 131 are set. Furthermore, constraints of being greater than or equal to 30 mm are set in order to avoid each candidate for weld line 155 to be a finely divided weld line.

For the optimization analysis condition related to the line length of the candidate for weld line 155, in a case where the densimetry is applied by topology optimization in the optimization analysis by the optimization analysis unit 23, the volume of the candidate for weld line 155 calculated on the basis of the mesh density of elements (two-dimensional elements, three-dimensional elements, and the like) to be modeled as the candidate for weld line 155 may be applied as constraints. In addition, for the constraints related to the volume constraint ratio of a low-stiffness-sensitivity part, the volume constraint ratio of a low-stiffness-sensitivity part to be left can be set to a predetermined value. In the first embodiment, constraints that the volume constraint ratio of the low-stiffness-sensitivity parts to be left (the cross member upper 116, the cross member lower 117, the bracket 122, the cross member front 118, and the cross member rear 119) be less than or equal to 50% are set.

(Optimization Analysis Unit)

The optimization analysis unit 23 applies the variable amplitude loading condition set by the variable amplitude loading condition setting unit 17 to the optimization analysis model, performs the optimization analysis under the optimization analysis conditions, obtains, as the optimal arrangement of weld lines, the arrangement of the candidates for weld lines 155 which achieves any of the purposes of reduction in the linear cumulative damage of the candidates for weld lines 155, improvement of the stiffness of the optimization analysis model, and minimization of the length of the candidates for weld lines 155 to be left, and obtains the remaining shapes of the low-stiffness-sensitivity parts as the optimized shapes of part models having low sensitivity to the stiffness performance.

As the optimization analysis by the optimization analysis unit 23, topology optimization can be applied. In a case where densimetry is used in the topology optimization, a normalized virtual density having a value from 0 to 1 is given as a design variable to the elements (two-dimensional elements, three-dimensional elements, or the like) modeled as the candidates for weld lines 155, and a density value that satisfies the optimization analysis condition is calculated.

The value of the calculated density being 1 means that the candidate for weld line 155 is completely present, and the value being 0 means that the candidate for weld line 155 is not present. The value being an intermediate value means that the bonding and joining of the parts assembly by the candidate for weld line 155 is in an intermediate state.

Therefore, in a case where the number of intermediate densities to which the densimetry is applied in the topology optimization is large, it is preferable to discretize using a penalty coefficient as expressed in Equation (3).

$$K_M(\rho) = \rho^{\,p}K \quad \cdots\cdots (3)$$

where,

$K_M$: stiffness matrix obtained by imposing penalty on stiffness matrix of elements
$K$ : stiffness matrix of elements
$\rho$ : normalized density, and
$p$ : penalty coefficient

Although the penalty coefficient often used for discretization is greater than or equal to 2, the penalty coefficient is preferably greater than or equal to 4 in the optimization analysis of joining positions according to the present invention.

The optimization analysis unit 23 may perform optimization analysis by topology optimization as described above or may perform optimization analysis by another calculation method.

Illustrated in FIG. 11 are mesh density distributions of the candidates for weld lines 155 and the low-stiffness-sensitivity part models (the part models of the cross member upper 116, the cross member lower 117, the bracket 122, the cross member front 118, and the cross member rear 119) obtained by performing optimization analysis by applying the densimetry in topology optimization by the optimization analysis unit 23. In the low-stiffness-sensitivity part model, a portion having a low mesh density can be punched or thinned for weight reduction. For example, by setting a mesh density of 0.40 as a threshold, a portion having a mesh density lower than or equal to 0.40 is determined as an unnecessary portion and is punched or thinned by tailor welded blank (TWB). An example of such a part shape reduced in weight is illustrated in FIG. 12. In the example illustrated in FIG. 12, a hole H is made in the cross member upper 116, the cross member lower 117, the cross member front 118, and the cross member rear 119, and the bracket 122 is thinned by the TWB. The tailored weld blank (TWB) refers to a member obtained by laser-joining materials having different plate thicknesses. In this example, the plate thickness of the original part was 2.6 mm, which was thinned to 1.0 mm. With such weight reduction, as shown in Examples described later, the weight of the original part was successfully reduced by 650 g from 16.2 kg to 15.5 kg (a weight reduction of 4.0%). The effects of the optimal arrangement of the weld lines obtained in the first embodiment will be described later in Examples.

<Optimization Analysis Method for Joining Positions of Automotive Body>

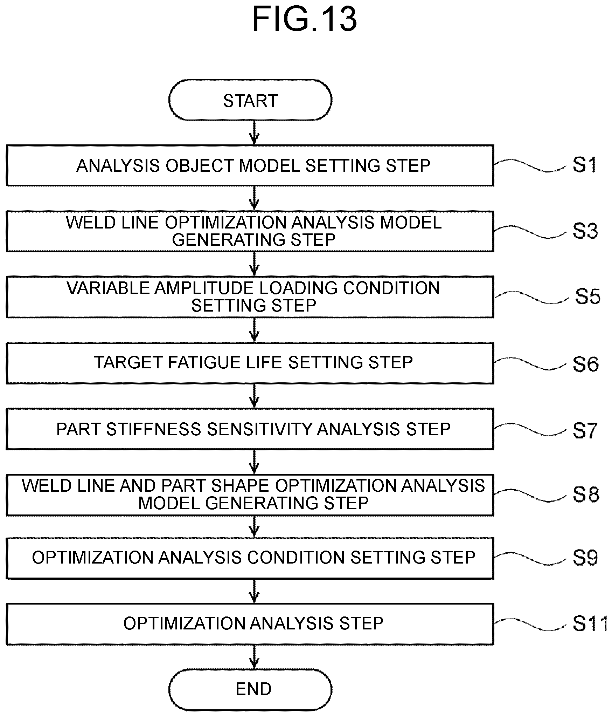

An optimization analysis method for joining positions of an automotive body (hereinafter, simply referred to as "optimization analysis method") according to the first embodiment of the invention is for a computer to execute the following steps, on the whole or a part of an automotive body model of an automobile having a plurality of part models including a beam element and a two-dimensional element and having initial weld lines 131 for bonding and joining the plurality of part models as a parts assembly, to perform optimization analysis to obtain the optimal arrangement of weld lines that achieve, as a purpose, any of improvement of the stiffness of the automotive body model, improvement of the fatigue life of the weld lines for bonding and joining of a parts assembly in the automotive body model, and minimization of the lengths of the weld lines. As illustrated in FIG. 13, the optimization analysis method includes an analysis object model setting step S1, a weld line optimization analysis model generating step S3, a variable amplitude loading condition setting step S5, a target fatigue life setting step S6, a part stiffness sensitivity analysis step S7, a weld line and part shape optimization analysis model generating step S8, an optimization analysis condition setting step S9, and an optimization analysis step S11. Each of the above steps will be described below. Each of the following steps is performed by the optimization analysis device 1 (FIG. 1) configured by a computer.

<<Analysis Object Model Setting Step>>

In the analysis object model setting step S1, the whole or a part of the automotive body model is set as the analysis object model.
In the first embodiment, in the analysis object model setting step S1, the analysis object model setting unit 13 sets the rear subframe model 111, which is a part of the automotive body model, as the analysis object model.

<<Weld Line Optimization Analysis Model Generating Step>>

The weld line optimization analysis model generating step S3 is to set, to the analysis object model, all the candidates for weld lines 155 that are candidates for weld lines of the optimum arrangement and to generate the weld line optimization analysis model.
In the first embodiment, in the weld line optimization analysis model generating step S3, the weld line optimization analysis model generating unit 15 generates an additional weld line 153 between initial weld lines 131 preset in the rear subframe model 111 and sets both the initial weld lines 131 and the additional weld line 153 as A candidate for weld line 155.

<<Variable Amplitude Loading Condition Setting Step>>

The variable amplitude loading condition setting step S5 is to divide the variable amplitude load applied to the weld line optimization analysis model 151 into loading conditions of a plurality of different vibration patterns to set a variable amplitude loading condition in which a predetermined number of cycles of a loading condition of each of the vibration patterns are combined to form one sequence.
In the first embodiment, in the variable amplitude loading condition setting step S5, the variable amplitude loading condition setting unit 17 of the optimization analysis device 1 sets a variable amplitude loading condition, in which one cycle of the loading condition of the first vibration pattern illustrated in FIG. 5(a) and five cycles of the loading condition of the second vibration pattern illustrated in FIG. 5(b) are combined to form one sequence (see FIG. 7), and further sets a constraint condition for constraining the constraint points a to d as illustrated in FIG. 5.

<<Target Fatigue Life Setting Step>>

The target fatigue life setting step S6 is to set the target fatigue life of the weld line optimization analysis model 151 by the number of sequences under the variable amplitude loading condition set in the variable amplitude loading condition setting step S5. As the target fatigue life of the weld line optimization analysis model 151, the loading conditions of the vibration patterns under the variable amplitude loading condition set in the variable amplitude loading condition setting step S5 may be applied to the analysis object model, and stress analysis may be separately performed. With the result of the stress analysis, the number of sequences of the variable amplitude loading condition as the fatigue life under the variable amplitude loading condition of an initial weld line 131 of the analysis object model may be calculated, and, on the basis of the calculated number of sequences of the variable amplitude loading condition as the fatigue life of the initial weld line 131, the number of sequences of the variable amplitude loading condition as the target fatigue life may be set, or the number of sequences of a predetermined variable amplitude loading condition may be set as the target fatigue life from the conventional empirical rule.

The target fatigue life is a fatigue life to be satisfied by a candidate for weld line 155 to be optimized, and at least the number of sequences greater than or equal to the number of sequences of the variable amplitude loading condition that is the minimum fatigue life (minimum fatigue life) of initial weld lines 131 calculated in the target fatigue life setting step S6 is set as the target fatigue life.

<<Part Stiffness Sensitivity Analyzing Step>>

The part stiffness sensitivity analysis step S7 is a step of setting objectives related to stiffness performance to the weld line optimization analysis model 151, performing sensitivity analysis of a part model included in the weld line optimization analysis model 151 with respect to the variable amplitude loading condition, and selecting a low-stiffness-sensitivity part model having low sensitivity to stiffness performance on the basis of the sensitivity of the part model.

<<Weld Line and Part Shape Optimization Analysis Model Generating Step>>

The weld line and part shape optimization analysis model generating step S8 is a step of generating the weld line and part shape optimization analysis model 156 in which the candidates for weld lines 155 of the weld line optimization analysis model 151 and a two-dimensional element included in the low-stiffness-sensitivity part model are set as the design space.

<<Optimization Analysis Condition Setting Step>>

In order to perform the optimization analysis in which the weld line and part shape optimization analysis model 156 is set as the optimization object, the optimization analysis condition setting step S9 is to obtain the number of cycles to failure of each candidate for weld line 155 for each loading condition of one of a plurality of different vibration patterns set in the variable amplitude loading condition setting step S5, to obtain, as a linear cumulative damage DM of each candidate for weld line 155, the sum of the ratios of the numbers of cycles of the loading conditions of the respective vibration patterns to the respective numbers of cycles to failure for the number of sequences of the variable amplitude loading condition set in the target fatigue life setting step S6, to set a condition regarding the linear cumulative damage of a candidate for weld line 155 to be left by the optimization analysis, a condition regarding the stiffness of the weld line optimization analysis model 151, and a condition regarding the length of the candidate for weld line 155 to be left by the optimization analysis as the objectives or constraints that are optimization analysis conditions, and to further set constraints regarding the volume constraint ratio of the low-stiffness-sensitivity part model.

In the optimization analysis condition setting step S9 in the first embodiment, the optimization analysis condition setting unit 21 sets, as the optimization analysis condition, maximization of the stiffness of the weld line and part shape optimization analysis model 156 (minimization of the displacement of the stiffness evaluation point A) as objectives and constraints that the fatigue life of the candidates for weld lines 155 be larger than the target fatigue life, constraints that the length of a candidate for weld line 155 to be left be less than or equal to the length of the initial weld line 131 and that the length of each candidate for weld line 155 be longer than or equal to 30 mm, and constraints that the volume constraint ratio of the low-stiffness-sensitivity part model to be left be less than or equal to 50%.

As the condition regarding the stiffness, for example, a predetermined position in the analysis object model may be set as a stiffness evaluation point, and displacement or strain of the stiffness evaluation point may be used as an index. Moreover, in the variable amplitude loading condition, for example, variable amplitude loads may be grouped depending on a vibration pattern thereof, and minimization of the value obtained by adding up displacements of the stiffness evaluation point A under the loading condition of each vibration pattern or minimization of the displacement of the stiffness evaluation point A under the variable amplitude loading condition may be set as the condition regarding the stiffness.

Meanwhile, the condition regarding the fatigue life is not limited to the condition in which the target fatigue life set in the target fatigue life setting step S6 is directly applied as constraints as it is, and for example, constraints that the linear cumulative damage DM of the candidate for weld line 155 be less than or equal to a linear cumulative damage corresponding to the target fatigue life may be applied.

<<Optimization Analysis Step>>

The optimization analysis step S11 is to apply the variable amplitude loading condition set in the variable amplitude loading condition setting step S5 to the weld line and part shape optimization analysis model 156, to perform optimization analysis under optimization analysis conditions, to obtain, as the optimal arrangement of weld lines, arrangement of the candidates for weld lines 155 which achieves, as a purpose, any of reduction in the linear cumulative damage of the candidates for weld lines 155, improvement of the stiffness of the weld line and part shape optimization analysis model 156, and minimization of the length of the candidates for weld lines 155 to be left, and to obtain the remaining shapes of the low-stiffness-sensitivity part model as the optimized shapes of part models having low sensitivity to the stiffness performance.

In the first embodiment, in the optimization analysis step S11, the optimization analysis unit 23 performs the optimization analysis using the candidates for weld lines 155 and the low-stiffness-sensitivity part model (the part models of the cross member upper 116, the cross member lower 117, the bracket 122, the cross member front 118, and the cross member rear 119) set in the rear subframe model 111 as the optimization object, obtains the arrangement of the candidates for weld lines 155 that satisfies the optimization analysis conditions as the optimal arrangement of weld lines 157, forms holes H in the cross member upper 116, the cross member lower 117, the cross member front 118, and the cross member rear 119, and thins the bracket 122 by the TWB (FIG. 12).

<Optimization Analysis Program for Joining Positions of Automotive Body>

The first embodiment of the present invention can be configured as an optimization analysis program for joining positions of an automotive body that causes each unit of the optimization analysis device 1 for joining positions of an automotive body configured by a computer to function. That is, the optimization analysis program for joining positions of an automotive body according to the first embodiment of the present invention uses the whole or a part of an automotive body model as an analysis object model, obtains an optimum arrangement of weld lines that achieves, as a purpose, any of improvement of the stiffness of the automotive body model, improvement of the fatigue life in the vicinity of the weld lines for bonding and joining a parts assembly in the automotive body model, and minimization of the lengths of the weld lines, and performs optimization analysis for obtaining an optimized shape of a part model having low sensitivity to the stiffness performance. As illustrated in FIG. 1 as an example, the optimization analysis program for joining positions of an automotive body according to the first embodiment of the present invention causes a computer to function as the analysis object model setting unit 13, the weld line optimization analysis model generating unit 15, the variable amplitude loading condition setting unit 17, the target fatigue life setting unit 18, the part stiffness sensitivity analyzing unit 19, the weld line and part shape optimization analysis model generating unit 20, the optimization analysis condition setting unit 21, and the optimization analysis unit 23.

As described above, according to the optimization analysis method, device and program for joining positions of an automotive body according to the first embodiment, the whole or a part of the automotive body model of the automobile is set as the analysis object model, the weld line optimization analysis model 151 in which the candidates for weld lines 155 to be bonded and joined as the parts assembly are set to the analysis object model is generated, and the optimization analysis is performed on the candidates for weld lines 155 by setting the line length to be left of the candidates for weld lines 155 to be optimized, the fatigue life, and the optimization analysis conditions (objectives or constraints) regarding the stiffness of the weld line and part shape optimization analysis model 156, whereby it is possible to obtain the optimum arrangement of the weld lines that achieve, as a purpose, any of minimization of the length of the candidates for weld lines 155, improvement of the stiffness of the analysis object model, and improvement of the fatigue life of the weld lines for bonding and joining of the parts assembly and, at the same time, to achieve weight reduction of a part that does not contribute to the stiffness improvement. As described above, by simultaneously setting the weld line and the part shape as optimization objects, it is possible to efficiently implement optimization of the two factors (weld line and part shape) mutually affecting each other.

In the above description, the automotive body model obtained by modeling the entire automotive body is acquired, and the rear subframe model 111 which is a part of the automotive body model is set as the analysis object model. However, in the present invention, the entire automotive body model may be set as the analysis object model, or a portion other than the rear subframe model 111 in the automotive body model may be set as the analysis object model. In addition, an automotive body partial model that is a part of an automotive body model may be acquired, and the acquired automotive body partial model may be set as the analysis object model.

In the above description, the case where the initial weld lines 131 are set to 6540 mm in advance in the rear subframe model 111 has been described as an example; however, the length of the initial weld lines 131 is not limited thereto.

Furthermore, the initial weld lines 131 are set in the rear subframe model 111 in advance by an operator or another means. However, in the present invention, by the analysis object model setting unit or in the analysis object model setting step, the operator may newly set initial weld lines 131 or may further add an initial weld line 131 to an analysis object model to which initial weld lines 131 are already set.

In the first embodiment, the loading conditions and the constraint condition illustrated in FIG. 5 are set to the rear subframe model 111. However, in the present invention, a variable amplitude loading condition and a constraint condition may be set as appropriate on the assumption of a portion of the automotive body to be analyzed or a variable amplitude load acting on the actual automotive body.

In the first embodiment, the target performance of the fatigue life of the candidates for weld lines 155 are set on the basis of the minimum fatigue life (minimum fatigue life) of the initial weld lines 131 set in the analysis object model.

However, in the present invention, the fatigue life of the candidates for weld lines 155 in the weld line optimization analysis model 151 in which the additional weld lines 153 are set (see FIG. 6) to the initial weld lines 131 before the optimization analysis is performed is calculated, the minimum fatigue life among the calculated fatigue lives of the candidates for weld lines 155 is determined, and it is preferable to set the target fatigue life in the optimization analysis so as to satisfy the following relationship.

(Minimum fatigue life of initial weld lines) $\leq$ (Target fatigue life of candidates for weld lines) $\leq$ (Minimum fatigue life of candidates for weld lines in which weld lines before optimization analysis are set)

Furthermore, in the above description, the optimization analysis is performed using both the initial weld lines 131 and the additional weld lines 153 as the candidates for weld lines 155. However, only the additional weld lines 153 may be used as the candidates for weld lines 155, and an optimal arrangement of weld lines to be added to the initial weld lines 131 may be obtained without using the initial weld lines 131 as the object of the optimization analysis.

Furthermore, if the optimization analysis is performed with the initial weld lines 131 set to be included in the candidates for weld lines 155, there are cases where the candidates for weld lines 155 bonded and joined as the parts assembly disappear in the optimization analysis, and the parts assembly becomes disassembled, whereby the optimization analysis cannot be performed. In such a case, it is preferable to include at least one fixed weld line, which is not an optimization analysis target, in each parts assembly.

The fixed weld line may be desirably selected from, for example, the initial weld lines 131, or candidates for fixed weld lines may be set, whereby stress analysis or optimization analysis of the analysis object model may be separately performed, and, on the basis of the result, a fixed weld line may be selected from among the candidates for fixed weld lines.

In the above description, the fatigue life of the candidates for weld lines 155 or the stiffness of the weld line optimization analysis model 151 is used as the objectives; however, the line length of the candidates for weld lines 155 may be used as the objectives, and the fatigue life and the stiffness may be used as the constraints.

[Second Embodiment]

The optimization analysis method for joining positions of an automotive body according to the first embodiment described above performs the optimization analysis of obtaining the optimal arrangement of weld lines that achieve, as a purpose, any of improvement of the stiffness of the automotive body model of an automobile having initial weld lines 131 for bonding and joining the plurality of part models as the parts assembly, improvement of the fatigue life of the weld lines for bonding and joining of the parts assembly in the automotive body model, and minimization of the lengths of the weld lines. However, the present invention can be configured as a manufacturing method of an automotive body in which weld lines for bonding and joining a parts assembly in the automotive body of an automobile are optimally arranged to improve the stiffness of the automotive body and the fatigue life of the weld lines.

In a manufacturing method of an automotive body according to a second embodiment, the optimization analysis method for joining positions of an automotive body according to the first embodiment described above is used to obtain the optimal arrangement of the weld lines for the whole or a part of the automotive body model of the automobile having the initial weld lines for bonding and joining the plurality of part models as the parts assembly. Furthermore, in the manufacturing method of an automotive body according to the second embodiment, an optimized shape of a part model having low sensitivity to stiffness performance (low-stiffness-sensitivity part model) is obtained. Next, on the basis of the optimized shape of the low-stiffness-sensitivity part model, the shape of a corresponding vehicle body part is modified. Furthermore, joining positions of the parts assembly in the automotive body of the automobile are determined on the basis of the obtained optimum arrangement of the weld lines of the automotive body model. Then, the parts assembly of the automotive body of the automobile is bonded and joined at the determined joining positions. As an aspect of modifying the shape of the corresponding automotive body part on the basis of the optimized shape of the low-stiffness-sensitivity part model, the following aspect can be described as an example.

In a case where the densimetry of topology optimization is used for the optimization analysis, a remaining shape obtained by removing (so-called hollowing out) unnecessary portions having a value less than or equal to a predetermined threshold (for example, a mesh density of 0.4) in a mesh density distribution from a part model (low-stiffness-sensitivity part model) having low sensitivity to the stiffness performance of the automotive body of the automobile is the optimized shape of the low-stiffness-sensitivity part model. As a specific example of an aspect of modifying the shape of the automotive body part, three-dimensional position data of the unnecessary portion in the low-stiffness-sensitivity part model is input to a CAD/CAM program and subjected to CAD processing such as smoothing processing or shape optimization processing in accordance with constraints at the time of actual manufacturing of the automotive body part, and CAD data of the corresponding automotive body part is modified. CAD data of a press forming die is prepared on the basis of the modified CAD data of the automotive body part, and a press forming die is prepared on the basis of the created CAD data of the press forming die. Then, using the prepared press forming die, an automotive body part whose shape is modified by press forming to be reduced in weight is manufactured.

Examples of an aspect of forming the press forming die include the following. The press forming dies include dies made by casting and dies made of steel. In the case of a press forming die made by casting, a full-mold casting method (evaporative-pattern casting method) is used in which a casting mold modal is fabricated from a material that disappears at a high temperature such as expanded polystyrene by NC processing using an NC machine tool. In addition, in the case of a press forming die made of steel, it is necessary to machine (cutting, grinding, and polishing) the steel material by NC processing. The CAD data of the press forming die prepared on the basis of the modified CAD data of the automotive body part is input to the CAD/CAM program linked with the NC machine tool and is converted into NC data (NC program) for NC machining. The NC machine tool machines a casting mold model made of expanded polystyrene or a mold made of steel. Then, using the acquired NC data (NC program), a casting mold model made of expanded polystyrene or a mold made of steel is fabricated by the NC machine tool, and an actual press forming die is prepared.

Examples of an aspect for determining the joining positions of the parts assembly in the automotive body of the automobile include the following. As a specific example of an aspect of determining the joining positions, position data in three-dimensional coordinates of the optimal arrangement of the weld lines of the automotive body model acquired using the optimization analysis method for joining positions of an automotive body is input to the CAD/CAM program linked with an NC unit of a welding robot disposed in an automotive body welding step of the automobile and is converted into NC data (NC program) for the welding robot. As a specific example of an aspect of bonding and joining the parts assembly in the automotive body of the automobile, the parts assembly of the automotive body of the automobile is bonded and joined at the determined joining positions by causing the welding robot disposed in the automotive body welding step of the automobile to operate using the converted NC data. As described above, according to the manufacturing method of the automotive body of the second embodiment, it is made possible to optimally arrange welding positions such as electric arc welding in the automotive body structure, to improve the fatigue life in the vicinity of the weld lines, and to improve the stiffness of the automotive body, thereby enabling reduction in the welding cost and improvement of stiffness and weight reduction of the automotive body.

[Examples]

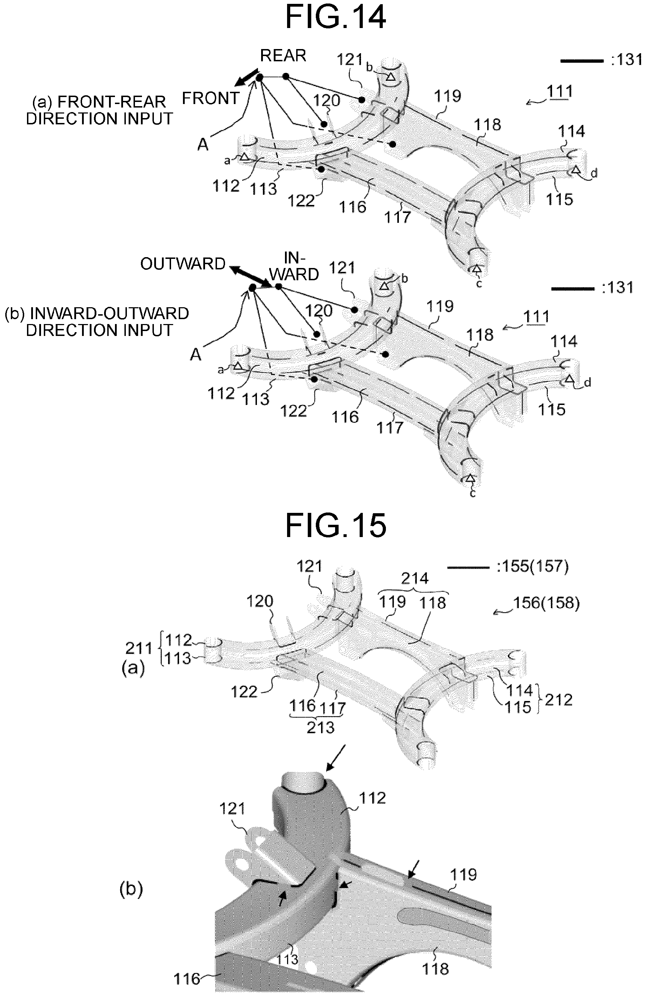

An analysis to confirm the effect of the present invention was performed, which will be described. In the analysis, as illustrated in FIG. 14, for the rear subframe model 111 in which a rear subframe is modeled, the optimal arrangement of weld lines for bonding and joining the part models included in the rear subframe model 111 as a parts assembly was obtained by optimization analysis.

In the rear subframe model 111, as described in the first embodiment, as part models, a subframe upper 112 and a subframe lower 113 are bonded and joined by electric arc welding to form a subframe R 211. Similarly, a subframe upper 114 and a subframe lower 115 are joined by electric arc welding to form a subframe L 212. A cross member upper 116 and a cross member lower 117 are joined by electric arc welding to form a cross member front 213. A cross member front 118 and a cross member rear 119 are joined by electric arc welding to form a rear cross member 214. The subframe R 211, the subframe L 212, the cross member front 213, and the rear cross member 214 are further joined by electric arc welding to form a parallel cross structure. Each of these part models are modeled by two-dimensional elements.

Furthermore, in the rear subframe model 111, initial weld lines 131 for bonding and joining part models as a parts assembly are set in advance. An initial weld line 131 is modeled by a two-dimensional element that joins nodes of two-dimensional elements of part models, and the length of the initial weld line 131 was 6540 mm.

<Example of the Invention>

In an example of the invention, first, a target fatigue life was set on the basis of the fatigue lives of the initial weld lines 131 under the variable amplitude loading condition illustrated in FIG. 7.

The variable amplitude loading condition illustrated in FIG. 7 includes the loading condition of the first vibration pattern in which the variable amplitude load of $\pm 2.5$ kN is input in the front-rear direction (input 1) (see FIG. 5(a)) and the condition of the second vibration pattern in which the variable amplitude load of $\pm 6.0$ kN is input in the inward-outward direction (input 2) (see FIG. 5(b)). As the variable amplitude loading condition, one sequence of variable amplitude loading condition is obtained by combining one cycle of the loading condition of the first vibration pattern and five cycles of the loading condition of the second vibration pattern.

Next, stress analysis of the rear subframe model 111 was performed for each of the loading condition of the first vibration pattern (FIG. 5(a)) and the loading condition of the second vibration pattern (FIG. 5(b)), and the stress generated in the initial weld lines 131 under the loading condition of each of the vibration patterns was obtained.

Subsequently, the numbers of cycles $N_1$ and $N_2$ until an initial weld line 131 is broken, when different stress amplitudes $\sigma_1$ and $\sigma_2$ generated in an initial weld line 131 under the variable amplitude loading conditions are independently generated in the initial weld line 131, were obtained from the S-N diagram (FIG. 8).

Then, the numbers of cycles $N_1$ and $N_2$ to fracture at each of the stress amplitudes and the number of cycles ni (= one cycle) and $n_2$ (= twenty cycles) of the loading condition of the first vibration pattern and the loading condition of the second vibration pattern under the variable amplitude loading conditions of one sequence were substituted into Equation (1) to obtain the linear cumulative damage dm of one sequence.

Furthermore, the number of sequences K when the linear cumulative damage DM calculated using Equation (2) was greater than or equal to 1 was calculated as the fatigue life of the initial weld line 131 under the variable amplitude loading condition, and a target fatigue life was set on the basis of the shortest fatigue life among the fatigue lives of the initial weld lines 131.

Next, as illustrated in FIG. 6, the weld line optimization analysis model 151, in which an additional weld line 153 is set between initial weld lines 131 and the like in the rear subframe model 111, and the initial weld lines 131 and the additional weld line 153 are set as a candidate for weld line 155, was generated.

Then, objectives related to stiffness performance of the weld line optimization analysis model 151, constraints related to the volume of a part model included in the weld line optimization analysis model 151, and a variable amplitude loading condition to be applied to the weld line optimization analysis model 151 were set, and a sensitivity analysis of the part model included in the weld line optimization analysis model 151 that satisfies the objectives under the variable amplitude loading condition and the constraints were performed. A low-stiffness-sensitivity part model having low sensitivity to stiffness performance were selected on the basis of the sensitivity of the part model.

Specifically, as described in the first embodiment, the density (mesh density) of the part model included in the weld line optimization analysis model 151 calculated by topology optimization was calculated as sensitivity using the densimetry in the topology optimization by setting minimization of the sum of strain energy in the part model include in the weld line optimization analysis model 151 and setting, as constraints, a volume constraint ratio of the part model included in the weld line optimization analysis model 151 as being 50% and, as the variable amplitude loading condition to be applied to the weld line optimization analysis model 151, the variable amplitude loading condition (input 1 and input 2) and the constraint condition illustrated in FIGS. 5(a) and 5(b). As a result of the sensitivity analysis, it was determined that parts of which total area of elements having a mesh density less than or equal to 0.5 occupies 50% or more of the surface area of all the parts were selected as low-stiffness-sensitivity part models, and as a result, the part models of the cross member upper 116, the cross member lower 117, the bracket 122, the cross member front 118, and the cross member rear 119 were selected as low-stiffness-sensitivity part models.

Then, the weld line and part shape optimization analysis model 156 in which the candidates for weld lines 155 of the weld line optimization analysis model 151 and two-dimensional elements included in the low-stiffness-sensitivity part models (part models of the cross member upper 116, the cross member lower 117, the bracket 122, the cross member front 118, and the cross member rear 119) are set as the design space. In the example of the invention, the weld line and part shape optimization analysis model 156 was used as the optimization object.

<Comparative Example>

In a comparative example, since the part shape is not set as the optimization object, the weld line optimization analysis model 151 described above was set as the optimization object.

Next, in both the example of the invention and the comparative example, an optimization analysis was performed by applying the loading conditions and the constraint condition illustrated in FIG. 5, whereby candidates for weld lines 155 satisfying the optimization analysis conditions were obtained. For the optimization analysis, topology optimization based on the densimetry was applied, and discretization was performed by setting the penalty coefficient to 4 in the topology optimization.

Table 1 shows the combination of the objectives and a constraint function of the optimization analysis conditions.

Table 1

| | Optimization Analysis Condition | | | | |
|---|---|---|---|---|---|
| | objectives | Constraints | | | |
| | | (I) Stiffness | (II) Fatigue Life | (III) Joining Length | (IV) Part Shape |
| Example of Invention | (I) Stiffness | - | ○ | ○ | ○ |
| Comparative Example | (I) Stiffness | - | ○ | ○ | NA |

The objectives related to the stiffness was set to that the displacement of the stiffness evaluation point A (see FIG. 14) under each of the loading condition of the first vibration pattern and the loading condition of the second vibration pattern is less than or equal to the displacement of the stiffness evaluation point A as of the time when the stress analysis is performed on the rear subframe model 111 in which the initial weld lines 131 are set.

As for the constraints related to the fatigue life, similarly to the initial weld lines 131 described above, the linear cumulative damage DM of the candidates for weld lines 155 under the variable amplitude loading condition was calculated. In addition, it was assumed that the fatigue life calculated from the linear cumulative damage DM of the candidates for weld lines 155 was larger than the target fatigue life. Furthermore, the objectives and the constraints regarding the length of the candidates for weld lines 155, namely, the joining lengths were set to a condition that the length of a candidate for weld line 155 to be left by the optimization analysis be less than or equal to the length of the initial weld line 131. The constraints of the part shape in the example of the invention were set to that the volume constraint ratio of a low-stiffness-sensitivity part be less than or equal to 50%.

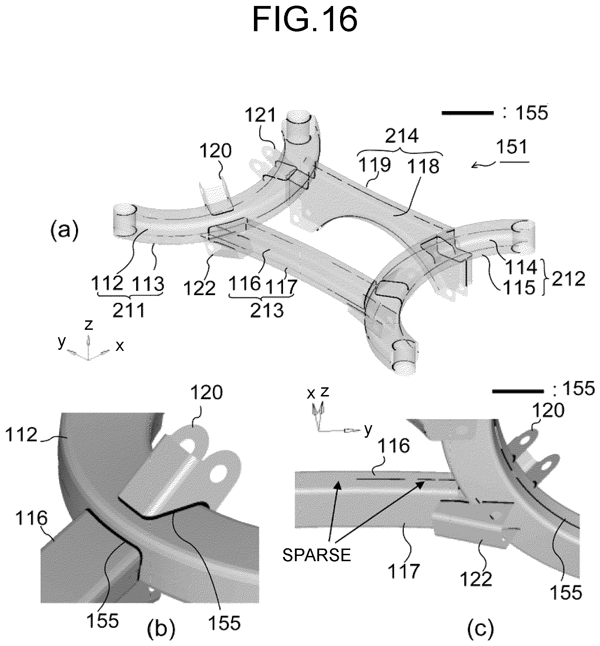

Illustrated in FIG. 15 is a result of remaining candidates for weld lines 155 and the part shape in the example of the invention, and a result of remaining candidates for weld lines 155 in the comparative example is illustrated in FIG. 16. In FIG. 15, as in the example illustrated in FIG. 12 described above, a portion having a low mesh density in a low-sensitivity part is illustrated in a punched shape.

In the example of the invention, as illustrated in FIG. 15, weld lines were sparsely arranged at the joining portion between the bracket 121 and the subframe upper 112, the joining portion between the cross member front 118 and the cross member rear 119, the joining portion between the cross member front 118 and the subframe lower 113, and others (portions indicated by a black arrow in FIG. 15(b)).

On the other hand, in the comparative example, as illustrated in FIG. 16, weld lines were densely arranged around the brackets 120, 121, and 122, and weld lines were also generally densely arranged in other portions as compared with the example of the invention. Specifically, as illustrated in Table 2 described later, the weld length (length of a weld line) of the comparative example was 6340 mm, whereas the weld length (length of a weld line) of the example of the invention was 6040 mm.

Next, in order to evaluate the performance of the example of the invention and the comparative example, the stiffness and the fatigue life of a weld line were calculated for, for the example of the invention, an optimal rear subframe model 158 (see FIG. 15), in which candidates for weld lines 155 remaining after the optimization analysis are set as weld lines 157 of the optimal arrangement and the part shape of a punched shape is adopted for a part having a mesh density of less than or equal to 0.2, and, for the comparative example, an analysis model in which the candidates for weld lines 155 remaining after the optimization analysis are set.

In the calculation of the stiffness and the fatigue life, the loading condition of the first vibration pattern and the loading condition of the second vibration pattern and the constraint condition illustrated in FIG. 5 were applied to an optimal weld line rear subframe model 161 to perform a stress analysis. For the stiffness, the displacement of the stiffness evaluation point A (see FIG. 5) obtained by the stress analysis under each of the loading condition of the first vibration pattern and the loading condition of the second vibration pattern was used as an index.

Regarding the fatigue life, the minimum fatigue life among the fatigue lives calculated using the stress of the weld lines obtained by the stress analysis of the optimal weld line rear subframe model 161 was used as an index.

The evaluation results are shown in Table 2. In Table 2, the weld length and the part weight are also shown.

Table 2

| | After Optimization | | Performance Evaluation Result | | |
|---|---|---|---|---|---|
| | Weld Length [mm] | Part Weight [kg] | Fatigue Life *1 [set(s)] | Improvement Rate of Stiffness *2 [%] | |
| | | | | Input 1 | Input 2 |
| Original Part | 6540 | 16.2 | 44000 | Reference | Reference |

(continued)

| | After Optimization | | Performance Evaluation Result | | |
|---|---|---|---|---|---|
| | Weld Length [mm] | Part Weight [kg] | Fatigue Life *1 [set(s)] | Improvement Rate of Stiffness *2 [%] | |
| | | | | Input 1 | Input 2 |
| Example of Invention | 6040 | 15.5 | 215000 | 4.2 | 1.3 |
| Comparative Example | 6340 | 16.2 | 230000 | 9.8 | 6.3 |

The improvement rates of stiffness of the input 1 and the input 2 were obtained by the following equations.

$$\text{Improvement Rate of Stiffness of Input 1 [\%]} = \left(1 - \frac{\text{Absolute Value of Displacement in Rearward (X) Direction of Point A in Optimized Weld Line Arrangement at Input 1 (Front-Rear Direction)}}{\text{Absolute Value of Displacement in Rearward (X) Direction of Point A in Initial Weld Line Arrangement at Input 1 (Front-Rear Direction)}}\right) \times 100$$

$$\text{Improvement Rate of Stiffness of Input 2 [\%]} = \left(1 - \frac{\text{Absolute Value of Displacement in Outward (Y) Direction of Point A in Optimized Weld Line Arrangement at Input 2 (Inward-Outward Direction)}}{\text{Absolute Value of Displacement in Outward (X) Direction of Point A in Initial Weld Line Arrangement at Input 2 (Inward-Outward Direction)}}\right) \times 100$$

The fatigue life of the example of the invention was significantly improved from that of the original part and was almost the same as that of the comparative example. In addition, with respect to the improvement rate of stiffness, both the example of the invention and the comparative example showed improvement from the original part. Furthermore, the weight of the part of the comparative example was 16.2 kg, whereas that of the example of the invention was 15.5 kg. The weight of the part of the example of the invention was reduced by 0.7 kg (4%) with respect to that of the original part. As described above, it has been demonstrated that the present invention can improve the fatigue life and the stiffness while reducing the weld length and the part weight.

Industrial Applicability

According to the present invention, it is possible to provide an optimization analysis method, device and program for joining positions of an automotive body, and a manufacturing method of an automotive body that can obtain optimal arrangement of weld lines that minimizes the lengths of the weld lines and simultaneously achieve weight reduction of a part not contributing to improvement of the stiffness in a case where a simple or variable amplitude load is input to the automotive body of the automobile while improving stiffness of the automotive body and the fatigue life of a continuous weld line for bonding and joining of a parts assembly in the automotive body.

Reference Signs List

1 OPTIMIZATION ANALYSIS DEVICE
3 DISPLAY DEVICE
5 INPUT DEVICE
7 MEMORY STORAGE
9 WORKING DATA MEMORY
11 ARITHMETIC PROCESSING UNIT
13 ANALYSIS OBJECT MODEL SETTING UNIT
15 WELD LINE OPTIMIZATION ANALYSIS MODEL GENERATING UNIT

17 VARIABLE AMPLITUDE LOADING CONDITION SETTING UNIT
18 TARGET FATIGUE LIFE SETTING UNIT
19 PART STIFFNESS SENSITIVITY ANALYZING UNIT
20 WELD LINE AND PART SHAPE OPTIMIZATION ANALYSIS MODEL GENERATING UNIT
21 OPTIMIZATION ANALYSIS CONDITION SETTING UNIT
23 OPTIMIZATION ANALYSIS UNIT
31 OPTIMIZATION ANALYSIS DEVICE
33 ARITHMETIC PROCESSING UNIT
34 OPTIMIZATION ANALYSIS UNIT
100 TIRE INPUT POINT
101 AUTOMOTIVE BODY MODEL FILE
111 REAR SUBFRAME MODEL
112 SUBFRAME UPPER
113 SUBFRAME LOWER
114 SUBFRAME UPPER
115 SUBFRAME LOWER
116 CROSS MEMBER UPPER
117 CROSS MEMBER LOWER
118 CROSS MEMBER FRONT
119 CROSS MEMBER REAR
120, 121, 122 BRACKET
131 INITIAL WELD LINE
141 ELECTRIC ARC WELDING PORTION
151 WELD LINE OPTIMIZATION ANALYSIS MODEL
153 ADDITIONAL WELD LINE
155 CANDIDATE FOR WELD LINE
156 WELD LINE AND PART SHAPE OPTIMIZATION ANALYSIS MODEL
157 WELD LINE
158 OPTIMAL REAR SUBFRAME MODEL
201 AUTOMOTIVE BODY MODEL
203 SIDE SILL
211 SUBFRAME R
212 SUBFRAME L
213 CROSS MEMBER FRONT
214 REAR CROSS MEMBER

**Claims**

1. An optimization analysis method for joining positions of an automotive body, the method causing a computer to execute following steps on a whole or a part of an automotive body model having a plurality of part models including a beam element and a two-dimensional element, the automotive body model having initial weld lines for bonding and joining the plurality of part models as a parts assembly, to perform optimization analysis: to obtain an optimal arrangement of weld lines that achieve, as a purpose, any of improvement of stiffness of the automotive body model, improvement of a fatigue life in a vicinity of the weld lines for bonding and joining of the parts assembly in the automotive body model, and minimization of lengths of the weld lines; and to obtain an optimized shape of the part model having low sensitivity to stiffness performance, the method comprising:

   an analysis object model setting step of setting the whole or a part of the automotive body model as an analysis object model;
   a weld line optimization analysis model generating step of generating a weld line optimization analysis model in which all candidates for weld lines that are candidates for the weld lines of the optimum arrangement are set for the analysis object model;
   a variable amplitude loading condition setting step of dividing a variable amplitude load applied to the weld line optimization analysis model into loading conditions of a plurality of different vibration patterns and setting a variable amplitude loading condition in which a predetermined number of cycles of a loading condition of each of the vibration patterns are combined to form one sequence;
   a target fatigue life setting step of setting a target fatigue life of the weld line optimization analysis model by the number of sequences of the variable amplitude loading condition;
a part stiffness sensitivity analysis step of

setting objectives related to stiffness performance of the weld line optimization analysis model, constraints related to a volume of the part model included in the weld line optimization analysis model, and the variable amplitude loading condition to be applied to the weld line optimization analysis model,
performing sensitivity analysis of the part model included in the weld line optimization analysis model that satisfies the objectives under the variable amplitude loading condition and the constraints, and
selecting a low-stiffness-sensitivity part model having low sensitivity to the stiffness performance on a basis of sensitivity of the part model;

a weld line and part shape optimization analysis model generating step of generating a weld line and part shape optimization analysis model in which the candidates for weld lines of the weld line optimization analysis model and a two-dimensional element included in the low-stiffness-sensitivity part model are set as a design space;
an optimization analysis condition setting step of, in order to perform an optimization analysis in which the weld line and part shape optimization analysis model is set as an optimization object,

obtaining a number of cycles to failure in a vicinity of each candidate for weld line for each loading condition of one of the vibration patterns,
obtaining, as a linear cumulative damage of each candidate for weld line, a sum of ratios of numbers of cycles of the loading conditions of the respective vibration patterns to the respective numbers of cycles to failure for the number of sequences of the variable amplitude loading condition set in the target fatigue life setting step, setting a condition regarding the linear cumulative damage of the candidate for weld line to be left by the optimization analysis, a condition regarding stiffness of the weld line and part shape optimization analysis model, and a condition regarding a length of the candidate for weld line to be left by the optimization analysis as objectives or constraints that are optimization analysis conditions, and
setting constraints regarding a volume constraint ratio of the low-stiffness-sensitivity part model; and

an optimization analysis step of

applying the variable amplitude loading condition set in the variable amplitude loading condition setting step to the weld line and part shape optimization analysis model,
performing the optimization analysis under the optimization analysis conditions,
obtaining, as the optimal arrangement of the weld lines, an arrangement of the candidates for weld lines which achieves, as a purpose, any of reduction in the linear cumulative damage of the candidates for weld lines, improvement of the stiffness of the optimization analysis model, and minimization of a length of the candidate for weld line to be left, and
obtaining a remaining shape of the low-stiffness-sensitivity part model as an optimized shape of the part model having low sensitivity to the stiffness performance.

2. The optimization analysis method for joining positions of the automotive body according to claim 1, wherein the optimization analysis step performs optimization analysis by topology optimization by densimetry, wherein discretization is performed by setting a penalty coefficient to greater than or equal to 4 in the topology optimization.

3. An optimization analysis device for joining positions of an automotive body, the device causing a computer to execute following steps on a whole or a part of an automotive body model having a plurality of part models including a beam element and a two-dimensional element, the automotive body model having initial weld lines for bonding and joining the plurality of part models as a parts assembly, to perform optimization analysis: to obtain an optimal arrangement of weld lines that achieve, as a purpose, any of improvement of stiffness of the automotive body model, improvement of a fatigue life in a vicinity of the weld lines for bonding and joining of the parts assembly in the automotive body model, and minimization of lengths of the weld lines; and to obtain an optimized shape of the part model having low sensitivity to stiffness performance, the device comprising:

an analysis object model setting unit that sets the whole or a part of the automotive body model as an analysis object model;
a weld line optimization analysis model generating unit that generates a weld line optimization analysis model in which all candidates for weld lines that are candidates for the weld lines of the optimum arrangement are set for the analysis object model;

a variable amplitude loading condition setting unit that divides a variable amplitude load applied to the weld line optimization analysis model into loading conditions of a plurality of different vibration patterns and sets a variable amplitude loading condition in which a predetermined number of cycles of a loading condition of each of the vibration patterns are combined to form one sequence;

a target fatigue life setting unit that sets a target fatigue life of the weld line optimization analysis model by the number of sequences of the variable amplitude loading condition;

a part stiffness sensitivity analysis unit that

sets objectives related to stiffness performance of the weld line optimization analysis model, constraints related to a volume of the part model included in the weld line optimization analysis model, and the variable amplitude loading condition to be applied to the weld line optimization analysis model,

performs sensitivity analysis of the part model included in the weld line optimization analysis model that satisfies the objectives under the variable amplitude loading condition and the constraints, and

selects a low-stiffness-sensitivity part model having low sensitivity to the stiffness performance on a basis of sensitivity of the part model;

a weld line and part shape optimization analysis model generating unit that generates a weld line and part shape optimization analysis model in which the candidates for weld lines of the weld line optimization analysis model and a two-dimensional element included in the low-stiffness-sensitivity part model are set as a design space;

an optimization analysis condition setting unit that, in order to perform an optimization analysis in which the weld line and part shape optimization analysis model is set as an optimization object,

obtains a number of cycles to failure in a vicinity of each candidate for weld line for each loading condition of one of the vibration patterns,

obtains, as a linear cumulative damage of each candidate for weld line, a sum of ratios of numbers of cycles of the loading conditions of the respective vibration patterns to the respective numbers of cycles to failure for the number of sequences of the variable amplitude loading condition set in the target fatigue life setting unit,

sets a condition regarding the linear cumulative damage of the candidate for weld line to be left by the optimization analysis, a condition regarding stiffness of the weld line and part shape optimization analysis model, and a condition regarding a length of the candidate for weld line to be left by the optimization analysis as objectives or constraints that are optimization analysis conditions, and

sets constraints regarding a volume constraint ratio of the low-stiffness-sensitivity part model; and

an optimization analysis unit that

applies the variable amplitude loading condition set by the variable amplitude loading condition setting unit to the weld line and part shape optimization analysis model,

performs the optimization analysis under the optimization analysis conditions,

obtains, as the optimal arrangement of the weld lines, an arrangement of the candidates for weld lines which achieves, as a purpose, any of reduction in the linear cumulative damage of the candidates for weld lines, improvement of the stiffness of the optimization analysis model, and minimization of a length of the candidate for weld line to be left, and

obtains a remaining shape of the low-stiffness-sensitivity part model as an optimized shape of the part model having low sensitivity to the stiffness performance.

4. The optimization analysis device for joining positions of the automotive body according to claim 3, wherein the optimization analysis unit performs optimization analysis by topology optimization by densimetry, wherein discretization is performed by setting a penalty coefficient to greater than or equal to 4 in the topology optimization.

5. An optimization analysis program for joining positions of an automotive body for performing, on a whole or a part of an automotive body model having a plurality of part models including a beam element and a two-dimensional element, the automotive body model having initial weld lines for bonding and joining the plurality of part models as a parts assembly, optimization analysis: to obtain an optimal arrangement of weld lines that achieve, as a purpose, any of improvement of stiffness of the automotive body model, improvement of a fatigue life in a vicinity of the weld lines for bonding and joining of the parts assembly in the automotive body model, and minimization of lengths of the weld lines; and to obtain an optimized shape of the part model having low sensitivity to stiffness performance, the program causing a computer to function as:

an analysis object model setting unit that sets the whole or a part of the automotive body model as an analysis object model;

a weld line optimization analysis model generating unit that generates a weld line optimization analysis model in which all candidates for weld lines that are candidates for the weld lines of the optimum arrangement are set for the analysis object model;

a variable amplitude loading condition setting unit that divides a variable amplitude load applied to the weld line optimization analysis model into loading conditions of a plurality of different vibration patterns and sets a variable amplitude loading condition in which a predetermined number of cycles of a loading condition of each of the vibration patterns are combined to form one sequence;

a target fatigue life setting unit that sets a target fatigue life of the weld line optimization analysis model by the number of sequences of the variable amplitude loading condition;

a part stiffness sensitivity analysis unit that

> sets objectives related to stiffness performance of the weld line optimization analysis model, constraints related to a volume of the part model included in the weld line optimization analysis model, and the variable amplitude loading condition to be applied to the weld line optimization analysis model,
> performs sensitivity analysis of the part model included in the weld line optimization analysis model that satisfies the objectives under the variable amplitude loading condition and the constraints, and
> selects a low-stiffness-sensitivity part model having low sensitivity to the stiffness performance on a basis of sensitivity of the part model;

a weld line and part shape optimization analysis model generating unit that generates a weld line and part shape optimization analysis model in which the candidates for weld lines of the weld line optimization analysis model and a two-dimensional element included in the low-stiffness-sensitivity part model are set as a design space;

an optimization analysis condition setting unit that, in order to perform an optimization analysis in which the weld line and part shape optimization analysis model is set as an optimization object,

> obtains a number of cycles to failure in a vicinity of each candidate for weld line for each loading condition of one of the vibration patterns,
> obtains, as a linear cumulative damage of each candidate for weld line, a sum of ratios of numbers of cycles of the loading conditions of the respective vibration patterns to the respective numbers of cycles to failure for the number of sequences of the variable amplitude loading condition set in the target fatigue life setting unit,
> sets a condition regarding the linear cumulative damage of the candidate for weld line to be left by the optimization analysis, a condition regarding stiffness of the weld line and part shape optimization analysis model, and a condition regarding a length of the candidate for weld line to be left by the optimization analysis as objectives or constraints that are optimization analysis conditions, and
> sets constraints regarding a volume constraint ratio of the low-stiffness-sensitivity part model; and

an optimization analysis unit that

> applies the variable amplitude loading condition set by the variable amplitude loading condition setting unit to the weld line and part shape optimization analysis model,
> performs the optimization analysis under the optimization analysis conditions,
> obtains, as the optimal arrangement of the weld lines, an arrangement of the candidates for weld lines which achieves, as a purpose, any of reduction in the linear cumulative damage of the candidates for weld lines, improvement of the stiffness of the optimization analysis model, and minimization of a length of the candidate for weld line to be left, and
> obtains a remaining shape of the low-stiffness-sensitivity part model as an optimized shape of the part model having low sensitivity to the stiffness performance.

6. The optimization analysis program for joining positions of an automotive body according to claim 5, wherein the optimization analysis unit performs optimization analysis by topology optimization by densimetry, wherein discretization is performed by setting a penalty coefficient to greater than or equal to 4 in the topology optimization.

7. A manufacturing method of an automotive body in which weld lines for bonding and joining a parts assembly in the automotive body are optimally arranged to improve stiffness of the automotive body and a fatigue life of the weld lines, the manufacturing method comprising:

**EP 4 501 749 A1**

obtaining an optimized shape of the part model having low sensitivity to stiffness performance and an optimum arrangement of the weld lines by using the optimization analysis method for joining positions of the automotive body according to claim 1 or 2;

changing a shape of a corresponding automotive body part on a basis of the optimized shape of the part model;

determining a joining position of the parts assembly in the automotive body on a basis of the obtained optimum arrangement of the weld lines; and

bonding and joining the parts assembly of the automotive body at the determined joining position.

# FIG.1

ARITHMETIC PROCESSING UNIT — 11

1

3 — DISPLAY DEVICE

5 — INPUT DEVICE

MEMORY STORAGE

7 —

101 — AUTOMOTIVE BODY MODEL FILE

ANALYSIS OBJECT MODEL SETTING UNIT — 13

WELD LINE OPTIMIZATION ANALYSIS MODEL GENERATING UNIT — 15

VARIABLE AMPLITUDE LOADING CONDITION SETTING UNIT — 17

TARGET FATIGUE LIFE SETTING UNIT — 18

PART STIFFNESS SENSITIVITY ANALYZING UNIT — 19

WELD LINE AND PART SHAPE OPTIMIZATION ANALYSIS MODEL GENERATING UNIT — 20

OPTIMIZATION ANALYSIS CONDITION SETTING UNIT — 21

OPTIMIZATION ANALYSIS UNIT — 23

WORKING DATA MEMORY — 9

# FIG.2

# FIG.3

INITIAL WELD LINE
6540mm

——— :131

# FIG.4

# FIG.5

(a) FRONT-REAR
DIRECTION INPUT

━━━ :131

(b) INWARD-OUTWARD
DIRECTION INPUT

━━━ :131

# FIG.6

(a) OPTIMIZATION
CANDIDATE FOR
WELD LINE
8500mm

(a)

(b)

(b-1)

—— :131
----- :153

(b-2)

(b-3)

# FIG.7

ONE SEQUENCE

ONE CYCLE  FIVE CYCLES

— A
⋯ B

NUMBER OF CYCLES

A: AMPLITUDE LOADING CONDITION OF
FIRST VIBRATION PATTERN·ONE CYCLE
B: AMPLITUDE LOADING CONDITION OF
SECOND VIBRATION PATTERN·FIVE CYCLES

# FIG.8

MINER'S RULE

FATIGUE LIMIT

MODIFIED MINER'S RULE

NUMBER OF CYCLES TO FAILURE N
(NUMBER OF CYCLES TO FAILURE)

# FIG.9

# FIG.10

# FIG.11

(a)

MESH DENSITY

1.000E+00
8.000E-01
6.000E-01
4.000E-01
2.000E-01
0.000E+00

—— :155

(b)

MESH DENSITY

1.000E+00
8.000E-01
6.000E-01
4.000E-01
2.000E-01
0.000E+00

—— :155

# FIG.12

(a)

(b)

# FIG.13

```
        ┌─────────────┐
        │    START    │
        └─────────────┘
               │
               ▼
┌──────────────────────────────────────────┐
│   ANALYSIS OBJECT MODEL SETTING STEP      │ ～～ S1
└──────────────────────────────────────────┘
               │
               ▼
┌──────────────────────────────────────────┐
│   WELD LINE OPTIMIZATION ANALYSIS MODEL   │ ～～ S3
│            GENERATING STEP                │
└──────────────────────────────────────────┘
               │
               ▼
┌──────────────────────────────────────────┐
│   VARIABLE AMPLITUDE LOADING CONDITION    │ ～～ S5
│             SETTING STEP                  │
└──────────────────────────────────────────┘
               │
               ▼
┌──────────────────────────────────────────┐
│     TARGET FATIGUE LIFE SETTING STEP      │ ～～ S6
└──────────────────────────────────────────┘
               │
               ▼
┌──────────────────────────────────────────┐
│   PART STIFFNESS SENSITIVITY ANALYSIS STEP │ ～～ S7
└──────────────────────────────────────────┘
               │
               ▼
┌──────────────────────────────────────────┐
│ WELD LINE AND PART SHAPE OPTIMIZATION ANALYSIS │ ～～ S8
│         MODEL GENERATING STEP             │
└──────────────────────────────────────────┘
               │
               ▼
┌──────────────────────────────────────────┐
│  OPTIMIZATION ANALYSIS CONDITION SETTING STEP │ ～～ S9
└──────────────────────────────────────────┘
               │
               ▼
┌──────────────────────────────────────────┐
│       OPTIMIZATION ANALYSIS STEP          │ ～～ S11
└──────────────────────────────────────────┘
               │
               ▼
        ┌─────────────┐
        │     END     │
        └─────────────┘
```

# FIG.14

(a) FRONT-REAR
DIRECTION INPUT

REAR
FRONT
A
121 b
120
119
118
111
114
112 113
122 116 117
115
— :131

(b) INWARD-OUTWARD
DIRECTION INPUT

OUTWARD
IN-
WARD
121
A
120
119
118
111
114
112 113
122 116 117
115
— :131

# FIG.15

(a)
121
120
214
119 118
— :155(157)
156(158)
211 { 112
113
122
116 117
213
114
115 } 212

(b)
121
112
119
116
113
118

# FIG.16

(a)

: 155

121
120
214
119 118
151

112 113 122 116 117 114 115 212
211 213

z
y x

(b)

120
112
116
155 155

(c)

x z
y
116
120
SPARSE
117 122
155
: 155

**EP 4 501 749 A1**

| | INTERNATIONAL SEARCH REPORT | International application No. |
|---|---|---|
| | | **PCT/JP2023/008574** |

**A. CLASSIFICATION OF SUBJECT MATTER**

*B62D 21/00*(2006.01)i; *G01M 7/02*(2006.01)i; *G01M 17/007*(2006.01)i; *G06F 30/15*(2020.01)i; *G06F 30/20*(2020.01)i
FI: G06F30/20; B62D21/00 A; G01M7/02 J; G01M17/007 Z; G06F30/15

According to International Patent Classification (IPC) or to both national classification and IPC

**B. FIELDS SEARCHED**

Minimum documentation searched (classification system followed by classification symbols)

B62D21/00; G01M7/02; G01M17/007; G06F30/15; G06F30/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus (JDreamIII); IEEE Xplore

**C. DOCUMENTS CONSIDERED TO BE RELEVANT**

| Category* | Citation of document, with indication, where appropriate, of the relevant passages | Relevant to claim No. |
|---|---|---|
| A | JP 2013-25593 A (JFE STEEL CORP.) 04 February 2013 (2013-02-04)<br>entire text, all drawings | 1-7 |
| A | WO 2019/123792 A1 (MITSUBISHI HITACHI POWER SYSTEMS, LTD.) 27 June 2019 (2019-06-27)<br>entire text, all drawings | 1-7 |
| A | JP 2015-4596 A (NIPPON STEEL & SUMITOMO METAL CORP.) 08 January 2015 (2015-01-08)<br>entire text, all drawings | 1-7 |
| A | WO 2004/099761 A1 (NIHON UNIVERSITY) 18 November 2004 (2004-11-18)<br>entire text, all drawings | 1-7 |
| A | WO 2020/070922 A1 (JFE STEEL CORP.) 09 April 2020 (2020-04-09)<br>entire text, all drawings | 1-7 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 501 749 A1

**INTERNATIONAL SEARCH REPORT**
**Information on patent family members**

International application No.

**PCT/JP2023/008574**

| Patent document cited in search report | | | Publication date (day/month/year) | Patent family member(s) | | | Publication date (day/month/year) |
|---|---|---|---|---|---|---|---|
| JP | 2013-25593 | A | 04 February 2013 | (Family: none) | | | |
| WO | 2019/123792 | A1 | 27 June 2019 | CN entire text, all drawings | 111465837 | A | |
| JP | 2015-4596 | A | 08 January 2015 | (Family: none) | | | |
| WO | 2004/099761 | A1 | 18 November 2004 | US entire text, all drawings | 2009/0211366 | A1 | |
| | | | | EP | 1640702 | A1 | |
| | | | | CN | 1771434 | A | |
| | | | | KR | 10-2006-0080123 | A | |
| WO | 2020/070922 | A1 | 09 April 2020 | US entire text, all drawings | 2021/0357544 | A1 | |
| | | | | EP | 3862903 | A1 | |
| | | | | CN | 112889058 | A | |
| | | | | KR | 10-2021-0033521 | A | |

Form PCT/ISA/210 (patent family annex) (January 2015)

**EP 4 501 749 A1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013025593 A

- JP 2016071770 A